# EUROPÄISCHE PATENTSCHRIFT

(11) **EP 1 690 013 B1**
(45) Veröffentlichungstag und Bekanntmachung des Hinweises auf die Patenterteilung: **14.11.2007**
(21) Anmeldenummer: 04797933.1
(22) Anmeldetag: 16.11.2004
(51) Int. Cl.: F16B 37/06, F16B 5/04, B21K 1/70

(54) **FUNKTIONSELEMENT, ZUSAMMENBAUTEIL BESTEHEND AUS DEM FUNKTIONSELEMENT IN KOMBINATION MIT EINEM BLECHTEIL, VERFAHREN ZUR HERSTELLUNG DES ZUSAMMENBAUTEILS SOWIE VERFAHREN ZUR HERSTELLUNG DES FUNKTIONSELEMENTS**
FUNCTIONAL ELEMENT, ASSEMBLING COMPONENT CONSISTING OF THE FUNCTIONAL ELEMENT COMBINED WITH A METAL SHEET, METHOD FOR PRODUCING THE ASSEMBLING COMPONENT AND METHOD FOR PRODUCING THE FUNCTIONAL ELEMENT
ELEMENT FONCTIONNEL, COMPOSANT D'ASSEMBLAGE COMPOSE DE L'ELEMENT FONCTIONNEL COMBINE A UNE TOLE, PROCEDE DE FABRICATION DU COMPOSANT D'ASSEMBLAGE ET PROCEDE DE FABRICATION DE L'ELEMENT FONCTIONNEL

(30) Priorität: 17.11.2003 DE 10353642
(43) Veröffentlichungstag der Anmeldung: 16.08.2006
(73) Patentinhaber: PROFIL-Verbindungstechnik GmbH & Co. KG, 61381 Friedrichsdorf (DE)
(72) Erfinder: BABEJ, Jiri, 35423 Lich (DE)
(74) Vertreter: Manitz, Finsterwald & Partner GbR
(86) Internationale Anmeldenummer: PCT/EP2004/012991
(87) Internationale Veröffentlichungsnummer: WO 2005/050034

(56) Entgegenhaltungen:
- EP-A- 0 133 087
- EP-A- 0 678 679
- EP-A- 0 713 982
- WO-A-94/01688
- US-A- 3 736 969

## Beschreibung

Die vorliegende Erfindung betrifft ein Funktionselement mit einer Längsachse, mit einem Körperteil, mit einem hohlen Stanzabschnitt, mit einer ringförmigen Auflagefläche am Körperteil, die sich im Wesentlichen senkrecht zu der Längsachse und vom Stanzabschnitt radial weg erstreckt, und mit einer sich axial erstreckenden Ringnut, die im Körperabschnitt radial innerhalb der Auflagefläche vorgesehen ist, wobei das Funktionselement zur Anbringung an ein zumindest im Bereich der Anbringung plattenförmiges Bauteil, insbesondere an ein Blechteil ausgelegt ist, der Körperabschnitt auf der dem Stanzabschnitt abgewandten Seite eine Andruckflache aufweist und Verdrehsicherungsrippen vorzugsweise vorgesehen sind, die die Ringnut mindestens teilweise überqueren, und das freie Ende des Stanzabschnitts mit einer ringförmigen Schneidkante versehen ist. Ferner befasst sich die vorliegende Erfindung mit einem Zusammenbauteil gemäß dem Anspruch 15, mit einem Verfahren zur Herstellung des Zusammenbauteils gemäß Anspruch 22 sowie mit einem Verfahren zur Herstellung des Funktionselements gemäß Anspruch 24.

Ein Funktionselement der eingangs genannten Art ist aus der EP 0 713 982 B1 bekannt.

Obwohl das bekannte Element auch selbststanzend in ein Blechteil eingebracht werden kann, ist das Element zu diesem Zweck noch nicht optimal ausgelegt.

Ein weiteres Funktionselement, das zumindest auf den ersten Blick dem Element gemäß EP 0 713 982 B1 ähnlich ist, ist aus der EP 0 678 679 B1 bekannt, weist aber keinen Stanzabschnitt auf und ist für die selbststanzende Einbringung in ein Blechteil nicht geeignet.

Aufgabe der vorliegenden Erfindung ist es, ein Funktionselement der eingangs genannten Art vorzusehen, das für die selbststanzende Einbringung in ein Blechteil besonders geeignet ist, das zu vernünftigen Kosten herstellbar ist und das auch mit einer breiten Palette von Blechdicken angewendet werden kann, ohne dass das Funktionselement für jede Blechdicke eine besondere Ausbildung aufweisen muss.

Zur Lösung dieser Aufgabe wird ein Funktionselement der eingangs genannten Art vorgesehen, das sich dadurch auszeichnet, dass ein ringförmiger Wulst am Stanzabschnitt zwischen der ringförmigen Auflagefläche und dem freien Ende des Stanzabschnitts vorgesehen ist und dass zwischen dem Wulst und dem freien Stirnende des Stanzabschnitts eine Ringvertiefung um den Stanzabschnitt herum vorgesehen ist.

Der Durchmesser des Stanzabschnitts an der ringförmigen Schneidkante kann größer sein als die maximale Querabmessung des ringförmigen Wulstes kann aber auch gleich groß oder kleiner sein als diese maximale Querabmessung, d.h. als der Durchmesser eines gedachten Zylinders, an dessen Oberfläche der Scheitel des Wulstes liegt.

An dieser Stelle soll auf die US-A-3,736,969 hingewiesen werden, die in Fig. 7 ein selbststanzendes Mutterelement zeigt, mit einem Stanzabschnitt mit einem umlaufenden Wulst. Abgesehen davon, dass der Stanzabschnitt in Draufsicht quadratisch ist, liegt zwischen dem Wulst und dem freien Stirnende des Stanzabschnitts keine Ringvertiefung vor.

Auch soll auf die EP-A-0 1.33 087 hingewiesen werden, die ein in Draufsicht rechteckiges Element zeigt, dessen mittlerer, ebenfalls rechteckiger Bereich zu einer Art Brücke hochgebogen wird, wobei der mittlere Bereich der Brücke zu einem zylindrischen Stanzabschnitt mit einem mittleren Gewinde umgeformt wird. Gemäß Fig. 11, die nur einen Schnitt durch das Brückenteil zeigt, kann der Stanzabschnitt ebenfall mit einem umlaufenden Wulst versehen werden. Auch hier liegt zwischen dem Wulst und dem freien Stirnende des Stanzabschnitts keine Ringvertiefung vor.

Bei allen dieser Varianten kann, bei geeigneter Auslegung der verwendeten Matrize sichergestellt werden, dass bei der Anbringung des Funktionselementes an ein Blechteil ein sauberes Stanzbutzen aus dem Blechteil durch die Zusammenarbeit zwischen der ringförmigen Schneidkante des Stanzabschnittes und der mittleren Bohrung der zur Herstellung des aus dem Funktionselement und dem Blechteil bestehenden Zusammenbauteils verwendeten Matrize entsteht. Andererseits kann aber auch insbesondere bei Verwendung von dünneren Blechteilen sichergestellt werden, dass das Blechmaterial an den ringförmigen Wulst herbeigeführt werden kann ohne diesen zu beschädigen.

Bei der Verwendung von dickeren Blechteilen bewegt sich der Ringvorsprung der Matrize, je nach den konkreten Abmessungen des Blechteils und des Funktionselementes weniger weit in Längsrichtung des Stanzabschnittes an der ringförmigen Schneidkante vorbei, so dass die stirnseitige Begrenzung der Bohrung der Matrize den ringförmigen Wulst nicht erreicht. Dann wird das Blechteil in die ringförmige Vertiefung zwischen dem ringförmigen Wulst und der ringförmigen Schneidkante hineingedrückt, und zwar ohne dass bei ungünstigen Blechdicken das Blechmaterial zwischen dem Scheitel des ringförmigen Wulstes und der stirnseitigen Begrenzung der Matrize unnötig verdünnt wird. Auf diese Weise umgreift das Blechmaterial den ringförmigen Wulst und trägt zum Auspress- bzw. Ausziehwiderstand bei.

Besonders günstig ist es, wenn die Ringnut über eine zumindest im Wesentlichen konusförmige Fläche in die ringförmige Auflagefläche ausläuft.

Bei Anbringung des Funktionselementes an das Blechteil wird Blechmaterial durch die Matrize in die Ringnut hineingedrückt und es liegt ein sanfter Übergang vom Blechmaterial in der Nut zum Blechmaterial an der ringförmigen Auflagefläche vor, wodurch das Blechteil in diesem Bereich nicht unnötig verdünnt oder verletzt wird.

Der ringförmige Wulst weist in einer axialen Schnittebene vorzugsweise eine zumindest im Wesentlichen dreieckige Form auf. Dies ist eine stabile Form für den Ringwulst und führt auch zu einem ausgezeichneten Eingriff zwischen dem Ringwulst und dem Blechmaterial.

Die Ringvertiefung erstreckt sich vorzugsweise radial innerhalb des ringförmigen Wulstes und ist ebenfalls vorzugsweise auf der dem freien Stirnende des Stanzabschnitts abgewandten Seite vom ringförmigen Wulst begrenzt. Diese Ausbildung führt zu einer kompakten, insgesamt kurzen Ausbildung des Stanzabschnittes und erlaubt eine sinnvolle Auslegung des Funktionselements, damit dieses einerseits mit verschiedenen Blechdicken verwendet werden kann.

Das Funktionselement kann als Befestigungselement realisiert werden, beispielsweise als hohles Befestigungselement, das einen zur Aufnahme eines Bolzens vorgesehenen Befestigungsabschnitt aufweist.

Im Falle der Realisierung des Funktionselements als ein Befestigungselement kann es günstig sein, den Körperteil mit einem Flanschabschnitt auszubilden, wobei die ringförmige Auflagefläche und die sich axial erstreckende Ringnut am bzw. im Flanschabschnitt auf dessen dem Flanschabschnitt zugewandten Seite vorgesehen sind. Die dem Stanzabschnitt abgewandte Seite des Flanschabschnitts ist vorzugsweise als ringförmige Andrückfläche ausgebildet, wobei ein Stempel zur Anbringung des Funktionselements an ein Blechteil vorzugsweise auf die ringförmige Andrückfläche drückt. Dies hat den Vorteil, dass ein etwaiges, im Funktionselement vorgesehenes Gewinde unter der Einwirkung der vom Stempel auf den Flanschabschnitt ausgeübten Kraft nicht verformt wird.

Wenn das Funktionselement als Befestigungselement realisiert ist, ist es erforderlich, Maßnahmen zu treffen, um das Funktionselement verdrehsicher im Blechteil zu halten. Um dies zu erreichen, sind vorzugsweise Verdrehsicherungsmerkmale beispielsweise in der Ringnut vorzusehen. Nach einem besonders bevorzugten Ausführungsbeispiel ist die Bodenfläche der Ringnut auf mindestens einem Teil ihrer radialen Erstreckung mit Verdrehsicherungsnasen und/oder Verdrehsicherungsnuten versehen. Am günstigsten ist es, wenn Verdrehsicherungsrippen vorgesehen sind, die die umlaufende Vertiefung überbrücken.

Nach einer besonders bevorzugten Ausbildung der Verdrehsicherungsrippen erstrecken sich diese erhaben in radialer Richtung innerhalb der Ringnut und ferner erhaben in axialer Richtung innerhalb der Ringnut bis zum Wulst. Dies bedeutet, dass die Verdrehsicherungsrippen zumindest im Wesentlichen eine rechtwinklige Form mit zwei Schenkeln aufweisen.

Dabei sollen die sich radial erstreckenden Abschnitte der Verdrehsicherungsrippen in radialer Richtung nicht über den Scheitelpunkt des Wulstes vorstehen und sie können mit Vorteil in Bezug auf den Scheitelpunkt auch leicht radial zurückversetzt angeordnet werden.

Besonders günstig ist es, wenn der ringförmige Wulst die Form mindestens einer Windung eines Gewindes aufweist. Aufgrund der Steigerung des Gewindes kann sichergestellt werden, dass unabhängig von der jeweiligen Blechdicke ein Teil des Wulstes sich stets in Eingriff mit dem Blechteil befindet, wodurch einerseits der Verdrehwiderstand und andererseits sich auch der Auszieh- bzw. Auspresswiderstand erhöhen lässt.

Besonders günstig ist es, wenn der Wulst die Form von mindestens zwei Abschnitten einer Windung eines Gewindes aufweist, da der Eingriff des Blechmaterials mit dem Wulst unabhängig von der Blechdicke dann an winkelmäßig beabstandeten Bereichen der Abschnitte stattfindet.

Besonders bevorzugt ist eine Anordnung, bei der der Wulst die Form von Abschnitten einer Windung eines Linksgewindes und einer Windung eines Rechtsgewindes aufweist, die abwechselnd um die Längsachse herum angeordnet sind. Dies erhöht nicht nur den Verdrehwiderstand in beiden Richtungen sondern stellt sicher, dass das Gewinde bzw. die Gewindeabschnitte in Bereichen liegen, die bei einer Vielzahl von möglichen Blechdicken in Frage kommen. Es ist insbesondere günstig, wenn die Windungsabschnitte aneinander angeschlossen sind und vorzugsweise einen geschlossenen Ring bilden. Bei diesem Beispiel können beispielsweise vier Windungsabschnitte vorgesehen werden.

Das Funktionselement kann keinesfalls nur als Befestigungselement realisiert werden. Stattdessen könnte das Funktionselement beispielsweise als Hohlbuchse realisiert werden, die zur Aufnahme einer drehbaren Welle oder eines stiftartigen Clips ausgelegt ist. Ferner könnte das Funktionselement so ausgebildet werden, dass ein Stift vom Körperteil weg ragt, und zwar vorzugsweise auf der Seite des Körperteils, die dem Stanzabschnitt abgewandt ist. Der Stift könnte auch als Clipaufnahme realisiert werden, wodurch beispielsweise ein Teppich... oder dergleichen auf den Stift aufgeclipst werden kann.

Besonders bevorzugte Ausführungsformen des erfindungsgemäßen Funktionselements sowie des Zusammenbauteils, des Verfahrens zur Herstellung des Zusammenbauteils und des Verfahrens zur Herstellung des Funktionselements gehen aus den Patentansprüchen hervor.

Die Erfindung wird nachfolgend näher erläutert anhand von Ausführungsbeispielen unter Bezugnahme auf die Zeichnung, in welcher zeigen:
- Fig. 1: eine Seitenansicht eines erfindungsgemäßen Funktionselements und zwar in einem axialen Schnitt auf der linken Seite der mittleren Längsachse und von außen auf der rechten Seite der mittleren Längsachse,
- Fig. 1A: eine vergrößerte Darstellung des Elements der Fig. 1 in einem axialen Schnitt und im Bereich einer Ringnut, in der Verdrehsicherungsrippen angeordnet sind,
- Fig. 2: eine schematische Darstellung der Anbringung des Funktionselements der Fig. 1 an ein Blechteil, und zwar in einem ersten Stadium auf der linken Seite der mittleren Längsachse und in einem zweiten Stadium auf der rechten Seite der mittleren Längsachse,
- Fig. 3: eine Darstellung nach der Beendigung des Anbringungsverfahrens gemäß Fig. 2,
- Fig. 4: eine schematische Darstellung eines erfindungsgemäßen Funktionselements nach der Anbringung an ein Blechteil mit einer besonderen Auslegung des Blechteils,
- Fig. 5: eine schematische Darstellung eines nicht erfindungsgemäßen Funktionselements.
- Fig. 6, 7, 8, 9: eine Zeichnungsreihe zur Erläuterung der Herstellung eines erfindungsgemäßen Funktionselements durch Kaltschlagen, und
- Fig. 10: eine Seitenansicht des fertig gestellten Funktionselements gemäß Fig. 9, wobei Fig. 10 zugleich eine weitere Ausführung eines erfindungsgemäßen Funktionselements zeigt.

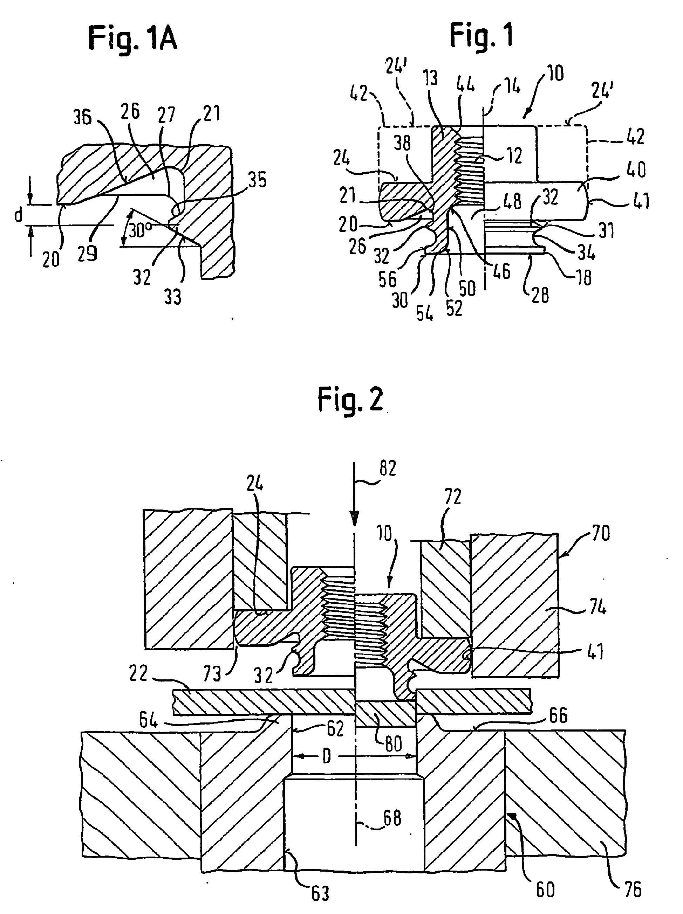

Die Fig. 1 zeigt ein erfindungsgemäßes Funktionselement 10 mit einer Längsachse 14, mit einem Körperteil 16, mit einem hohlen Stanzabschnitt 18, mit einer ringförmigen Auflagefläche 20 am Körperteil, die in einer im Wesentlichen senkrecht zu der Längsachse 14 angeordneten Ebene liegt und vom Stanzabschnitt 18 radial weg erstreckt, und mit einer sich axial erstreckenden Ringnut 21, die im Körperabschnitt radial innerhalb der Auflagefläche vorgesehen ist. Das Funktionselement ist zur Anbringung an ein zumindest im Bereich der Anbringung plattenförmiges Bauteil 22 (Fig. 2) insbesondere an ein Blechteil ausgelegt. Ferner weist der Körperteil 16 auf der dem Stanzabschnitt 18 abgewandten Seite eine ringförmige Andrückfläche 24 auf.

Bei der Anbringung des Funktionselements an ein Blechteil wird, wie später anhand der Fig. 2 bis 4 näher erläutert wird, mittels eines Stempels gegen die Andrückfläche 24 gedrückt.

Verdrehsicherungsrippen 26, die am besten aus der Detailzeichnung der Fig. 1A zu sehen sind, überqueren in diesem Beispiel die Ringnut 22. Solche Verdrehsicherungsrippen sind insbesondere dann erforderlich, wenn es sich bei dem Funktionselement um ein Befestigungselement handelt, wie hier in Form eines Mutterelementes mit Innengewinde 12 gezeigt. Das freie Ende 28 des Stanzabschnitts 18 ist mit einer ringförmigen Schneidkante 20 versehen.

Die Ausbildung des Stanzabschnittes des Befestigungselements 10 ist erfindungsgemäß von besonderer Bedeutung. Man sieht aus der Fig. 1, dass ein ringförmiger Wulst 32, der in diesem Beispiel als geschlossener Ringwulst ausgebildet ist, am Stanzabschnitt zwischen der ringförmigen Auflagefläche 20 und dem freien Ende 28 des Stanzabschnitts 18 vorgesehen ist. Ferner befindet sich zwischen dem Wulst und dem freien Stirnende des Stanzabschnitts eine Ringvertiefung 34 um den Stanzabschnitt herum.

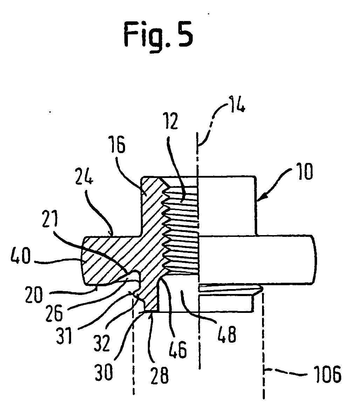

In diesem Beispiel liegt die ringförmige Schneidkante 30 radial weiter nach außen als der Scheitel des Wulstes. D.h. der Durchmesser der Schneidkante ist so bemessen, dass er größer ist als die maximale Querabmessung des Wulstes 32. Im Falle des ringförmigen Wulstes 32 der Ausführung gemäß Fig. 1 ist dieser an der Spitze kreisrund, wodurch die maximale Querabmessung dem Durchmesser des Ringwulstes an der Spitze entspricht. Wenn der Ringwulst gemäß einer bevorzugten Ausführungsform die Form eines Gewindeganges, d.h. die Windung eines Gewindes oder die Form von Gewindegängen oder Gewindegangabschnitte aufweist, so liegen die Scheitelpunkte des Wulstes stets an der Oberfläche eines gedachten Umhüllungszylinders (106 in Fig. 5), dessen Durchmesser dann die maximale Querabmessung des Gewindes darstellt.

Es ist aber nicht zwingend erforderlich, dass der Durchmesser der ringförmigen Schneidkante 20 größer ist als die maximale Querabmessung des Wulstes 32. Stattdessen könnte der Durchmesser der ringförmigen Schneidkante 30 der maximalen Querabmessung des Wulstes 32 entsprechen oder kleiner als diese sein.

Wie aus der Fig. 1 und vor allem aus der Fig. 1A ersichtlich, läuft die Ringnut 21 über eine zumindest im Wesentlichen konusförmige Fläche 36 in die ringförmige Auflagefläche 20 aus. Auf der radial inneren Seite bildet die sich axial erstreckende Ringnut 21 zusammen mit dem Wulst 32 eine radiale Ringnut 38, die im Querschnitt gerundet ist, insbesondere im Bodenbereich der Ringnut, der sich im Körperabschnitt 16 befindet.

Wie ebenfalls aus der Fig. 1A am besten zu sehen, weist der ringförmige Wulst 32 in einer axialen Schnittebene eine zumindest im Wesentlichen dreieckige Form auf, wobei in diesem Beispiel beide Seitenflanken 33, 35 des Wulstes einen Winkel von zumindest im Wesentlichen 30° mit einer Ebene senkrecht zur mittleren Längsachse des Elements bilden, wie für die untere Flanke 33 gezeigt ist.

Die Ringvertiefung 34 erstreckt sich radial innerhalb des ringförmigen Wulstes, d.h. radial innerhalb der Umhüllungszylinder, die den Lokus der Scheitelpunkte des Wulstes definieren und die Ringvertiefung ist vorzugsweise auf der dem freien Stirnende des Stanzabschnittes abgewandten Seite vorzugsweise vom ringförmigen Wulst begrenzt, d.h. geht sanft in diesen ringförmigen Wulst ohne Zwischenbereich über.

Die Ringvertiefung 34 selbst ist in einer axialen Schnittebene gesehen zumindest im Wesentlichen U-förmig und weist vorzugsweise im Wesentlichen die Form eines Halbkreises auf.

In diesem Beispiel ist der Körperabschnitt 16 mit einem Flanschabschnitt 40 versehen, wobei die ringförmige Auflagefläche 20 und die sich axial erstreckende Nut 21 am bzw. im Flanschabschnitt 40 auf dessen dem Stanzabschnitt zugewandten Seite vorgesehen sind, während die dem Stanzabschnitt abgewandte Seite des Flanschabschnittes 40 die ringförmige Andrückfläche 24 bildet. Diese Form des Funktionselements, die beispielsweise bei einem Befestigungselement günstig sein kann, ist nicht zwingend erforderlich, stattdessen könnte die Mantelfläche des Körperabschnitts 16 entsprechend der gestrichelten Linie 42 in Fig. 1 verlaufen, wobei die ringförmige Andrückfläche dann, wie bei 24' angedeutet, am in Fig. 1 oberen Ende des Funktionselements sich befindet.

Wie gesagt ist das Funktionselement der Fig. 1 als Mutterelement ausgebildet mit dem Gewinde 12, wobei am oberen Stirnende 44 des Funktionselements das Gewinde 12 in eine konusförmige Gewindeauslaufvertiefung ausläuft.

Man sieht in Fig. 1, dass der durch das Gewinde 12 definierte Befestigungsabschnitt 13 des Befestigungselements sich ausschließlich im Bereich des Körperteils 16 befindet und an seinem in Fig. 1 unteren Ende über eine konusförmige oder gerundete Fläche 46 in einen zylinderförmigen Hohlraum 50 übergeht, mit einem Durchmesser, der etwas größer ist als der Außendurchmesser des Gewindezylinders 12. Der Zylinder 50 wiederum geht über eine entweder konusförmig oder leicht gerundete Ringfläche 52 in die untere ringförmige Stirnseite 54 des Stanzabschnittes 18 an dem freien Stirnende 28 des Stanzabschnitts über. Die ringförmige Stirnseite 54 liegt in diesem Beispiel in einer Ebene, die senkrecht zur mittleren Längsachse 14 des Elements steht. Dies ist aber nicht zwingend erforderlich. Die ringförmige Stirnseite 54 könnte auch als Konusfläche mit einem eingeschlossenen Konuswinkel kleiner als 180°, beispielsweise im Bereich von 180° bis 150° oder weniger ausgebildet werden.

Diese Form des Elements 10 bzw. des Hohlraumes 48 ist einerseits bei der Herstellung des Funktionselements technisch günstig und erleichtert andererseits die Einführung einer Schraube von unten in das Gewinde hinein, da die ringförmige Fläche 52, die Zylinderfläche 50 und die gerundete oder konusförmige Fläche 46 einer zunehmenden Zentrierung der Schraube bei deren Einführung in das Gewinde 12 dienen.

Ebenfalls aus Fig. 1 ersichtlich ist, dass die ringförmige Schneidkante 30 auf der unteren Seite durch die plane ringförmige Stirnseite 54 des Funktionselements gebildet ist, d.h. durch eine Fläche, die senkrecht zur Längsachse des Funktionselements steht und auf der radial äußeren Seite von einer zylinderförmigen Fläche 56 umgeben ist, d.h. die ringförmige Schneidkante stellt die Überschneidung der Zylinderfläche 56 und der Stirnseite 54 dar.

Obwohl sich in diesem Beispiel der durch das Gewinde 12 definierte Befestigungsabschnitt vollständig im Körperteil 16 des Funktionselements befindet, ist das nur eine der möglichen Positionen des Befestigungsabschnittes, d.h., der Befestigungsabschnitt bzw. das Gewinde 12 könnte eine der folgenden Ausbildungen aufweisen
a) er befindet sich auf der dem Stanzabschnitt 18 abgewandten Seite des Flanschabschnittes 40,
b) er befindet sich auf der dem Stanzabschnitt 18 abgewandten Seite des Flanschabschnittes 40 und erstreckt sich mindestens teilweise in den Flanschabschnitt 40 hinein,
c) er befindet sich auf der dem Stanzabschnitt 18 abgewandten Seite des Flanschabschnittes 40 und erstreckt sich durch die gesamte axiale Dicke des Flanschabschnitts 40 hindurch,
d) er befindet sich auf der dem Stanzabschnitt 18 abgewandten Seite des Flanschabschnittes 40 und erstreckt sich durch die gesamte axiale Dicke des Flanschabschnitts 40 sowie durch einen Teil der axialen Länge des Stanzabschnittes 18 hindurch,
e) er befindet sich auf der dem Stanzabschnitt 18 abgewandten Seite des Flanschabschnittes 40 und erstreckt sich durch die gesamte axiale Dicke des Flanschabschnitts sowie durch die gesamte axiale Länge des Stanzabschnittes 18 hindurch,
f) er befindet sich auf der dem Stanzabschnitt 18 zugewandten Seite des Flanschabschnittes 40 und erstreckt sich durch einen Teil der axialen Dicke des Flanschabschnitts 40 sowie durch einen Teil der gesamten axialen Länge des Stanzabschnittes 18 hindurch,
g) er befindet sich auf der dem Stanzabschnitt 18 zugewandten Seite des Flanschabschnittes 40 und erstreckt sich durch einen Teil der axialen Dicke des Flanschabschnitts 40 sowie durch die gesamte axiale Länge des Stanzabschnittes hindurch,
h) er befindet sich auf der dem Stanzabschnitt 18 zugewandten Seite des Flanschabschnittes 40 und erstreckt sich nur durch die gesamte axiale Länge des Stanzabschnittes 18 hindurch,
i) er befindet sich auf der dem Stanzabschnitt 18 zugewandten Seite des Flanschabschnittes 40 und erstreckt sich nur durch einen Teil der gesamten axialen Länge des Stanzabschnittes 18 hindurch.

Der Befestigungsabschnitt 13 muss nicht von vorne herein mit einem Gewinde 12 versehen werden, sondern es könnte hier eine glatte Bohrung vorliegen, die nachträglich mit einem Gewinde versehen wird, beispielsweise dadurch, dass das Gewinde beim Einschrauben einer gewindeformenden oder gewindeschneidenden Schraube ausgebildet wird.

Wie aus der Fig. 1A ersichtlich, wird die Ringnut 21 nicht nur in radialer Richtung von den Verdrehsicherungsrippen 26 überbrückt, sondern diese erstrecken sich auch erhaben in axialer Richtung am Stanzabschnitt 18 entlang bis zur Oberseite 35 des Ringwulstes 32. Am Übergang zwischen dem sich radial erstreckenden Bereich der Verdrehsicherungsrippen und dem sich radial innerhalb des Ringwulstes 21 axial erstreckenden Bereich dieser Verdrehsicherungsrippen liegt vorzugsweise eine Rundung vor.

In diesem Beispiel sind die Unterseiten 29 der Verdrehsicherungsrippen 26 von der ringförmigen Anlagefläche 20 leicht zurückversetzt, beispielsweise um etwa 0,02 mm. Der Abstand "d" zwischen der ringförmigen Auflagefläche 20 und dem Scheitelpunkt des Ringwulstes 32 beträgt beispielsweise 0,3 mm bei einem Element mit einem M8-Gewinde. Ferner beträgt in diesem Beispiel die maximale Querabmessung des Ringwulstes 32 13,3 mm, der Durchmesser der Schneidkante 13,5 mm und der Durchmesser im Bodenbereich der Ringnut 34 12 mm. Das geeignete Blechteil könnte beispielsweise eine Dicke im Bereich zwischen 0,6 mm und 4 mm beispielsweise 1,7 mm aufweisen.

Die Bezeichnungen Oberseite, Unterseite usw., wie hier verwendet, beziehen sich lediglich auf die geometrische Darstellung in den Figuren und stellen keine Beschränkung der räumlichen Anordnung des Funktionselements dar.

Es wird nunmehr die Anbringung eines Funktionselements gemäß Fig. 1, 1A an ein plattenförmiges Bauteil erläutert. Die Bezeichnung "plattenförmiges Bauteil" umfasst zwar in erster Linie Blechteile, die Anwendung des erfindungsgemäßen Funktionselements ist aber keineswegs auf die Anwendung mit Blechteilen beschränkt.

Stattdessen könnte das Bauteil 22 aus Kunststoff bestehen oder es könnte lediglich einen Wandbereich eines Gussteils darstellen, der im Anbringungsbereich des Funktionselements plattenförmig ausgebildet ist. Auch könnte das erfindungsgemäße Funktionselement mit Sandwichbauteilen verwendet werden, d.h. mit Bauteilen, die in der EP-Anmeldung 01927700.3 (= EP-A-1269033) beschrieben sind. Auch könnte es sich bei dem plattenförmigen Bauteil um ein Bauteil handeln, das aus Kunststoff besteht, mit einer Blecheinlage im Anbringungsbereich des Funktionselements.

Bezug nehmend auf die Fig. 2 ist ersichtlich, dass das Blechteil 22 auf eine Matrize 60 abgestützt wird, die eine Bohrung 62 aufweist, mit einem Durchmesser D der zur Aufnahme der ringförmigen Schneidkante 30 des Stanzabschnitts 18 des Befestigungselements 10 ausgelegt ist. Das heißt, der Durchmesser D der Matrize ist geringfügig größer als der Durchmesser der ringförmigen Schneidkante 30.

Die Bohrung 62 der Matrize 60 ist von einem Ringvorsprung 64 umgeben, die auf der der Bohrung radial abgewandten Seite in eine Fläche 66 senkrecht zur Längsachse 68 der Bohrung übergeht, wobei die Längsachse 68 der Bohrung zumindest im Wesentlichen mit der Längsachse 14 des Befestigungselements 10 fluchtet.

Das Funktionselement 10 ist, wie schematisch in Fig. 2 dargestellt ist, in einem Setzkopf 70 aufgenommen mit einem Stempel 72, der auf die ringförmige Andrückfläche 24 wirkt und mit einem rohrförmigen, eine Aufnahme 73 für das Befestigungselement 10 bildenden Gehäuseteil 74, der die Mantelfläche 41 des Flanschabschnittes 40 umgibt und das Funktionselement in Bezug auf die Matrize 60 zentriert.

Der Setzkopf 70 ist in an sich bekannter Weise am oberen Werkzeug einer Presse (nicht gezeigt) angeordnet und wird in der üblichen Art und Weise so ausgestaltet, dass das jeweilige Mutterelement 10 in die Aufnahme 73 des Setzkopfes aufgenommen wird, bevor der Setzkopf 70 mit dem oberen Werkzeug der Presse in Pfeilrichtung 82 auf das Blechteil 22 zu gefahren wird. Die Aufnahme 73 kann beispielsweise mit Magneten (nicht gezeigt) ausgestattet werden, um das Funktionselement 10 zu halten, das beispielsweise von einem Roboter in die Aufnahme platziert wird. Dabei befindet sich die Matrize 60 in einem unteren Werkzeug 76 der Presse, das beispielsweise an einer Zwischenplatte der Presse oder am Pressentisch montiert ist. Es ist auch durchaus möglich, den Setzkopf 70 an der Zwischenplatte der Presse zu montieren und die Matrize 60 in einem unteren Werkzeug am Pressentisch unterzubringen. Es ist ebenfalls möglich, den Setzkopf 70 im unteren Werkzeug 76 der Presse anzuordnen, so dass die stirnseitige Öffnung der Aufnahme 73 nach oben anstatt nach unten weist und die Matrize 60 dann an der Zwischenplatte der Presse oder am oberen Werkzeug der Presse anzuordnen. Auch können der Setzkopf 70 und/oder die Matrize 60 von einem Roboter getragen werden oder in einem C-Gestell montiert werden mit Vorschub für die Matrize und/oder den Setzkopf.

In der Ausführung gemäß Fig. 2 ist der Setzkopf 68 als massiver Setzkopf mit im Gehäuse fest angeordnetem Stempel 72 gezeigt.

Die Auslegung des Setzkopfes 70 kann aber genauso erfolgen, als Alternative zu der dargestellten Variante, wie in den Fig. 24 bis 38 der EP-B-755749 gezeigt ist. Eine solche Ausführung hat den Vorteil, dass die Funktionselemente 10 über einen Zuführkanal in die Aufnahme des Setzkopfes geführt werden können und dann mittels des Stempels gegen das Blechteil gepresst werden können.

Beim Schließen der Presse bewegt sich das Funktionselement 10, nach Einführung eines Blechteils in die Presse oberhalb der Matrize von der Position, die auf der linken Seite der Fig. 2 gezeigt ist, kontinuierlich näher in Richtung des Blechteils, wobei, wie auf der rechten Seite von Fig. 2 gezeigt, das untere Stirnende 28 des Stanzabschnitts 18 gerade begonnen hat, mit dem Ringvorsprung 64 der Matrize, die das Blechteil 22 abstützt, einen kreisförmigen Stanzbutzen 80 aus dem Blechteil 22 herauszutrennen. Der Stanzbutzen 80 fällt durch die Bohrung 62 der Matrize in den Bereich der erweiterten Bohrung 63 und kann in an sich bekannter Weise dann aus der Matrize entsorgt werden.

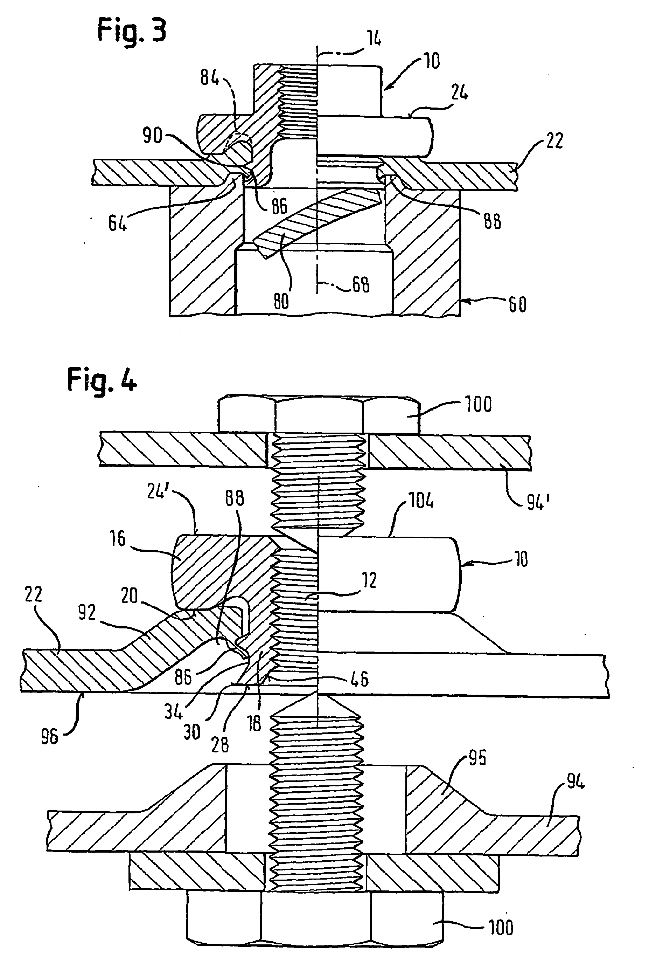

Bei vollständiger Schließung der Presse (oder der Greifzange eines Roboters oder der Betätigungseinrichtung eines C-Gestells) befindet sich das Funktionselement in Bezug auf das Blechteil in der Position gemäß Fig. 3. Das heißt, gleichzeitig mit dem Heraustrennen des Stanzbutzens 80 oder danach wird durch die Bewegung des Körperteils 16 auf das Blechteil 22 und die Matrize 60 zu das Blechmaterial mittels des Ringvorsprungs 62 in die Ringnut 22 und um den ringförmigen Wulst 32 herum umgeformt, wodurch eine formschlüssige Verbindung zwischen dem Blechteil und dem Befestigungselement erzeugt wird.

Dabei wurde das Blechmaterial um die Flanken der Verdrehsicherungsrippen umgeformt, so dass sowohl im Bereich axial oberhalb der ringförmigen Anlagefläche 20 und im Bereich zwischen dem Scheitelpunkt des ringförmigen Wulstes 32 und der Bodenfläche der ringförmigen Nut 21 das Blechmaterial die Verdrehsicherungsrippen zumindest im Wesentlichen umschließt. Dies führt zu ausgezeichneten Verdrehsicherungswerten.

Obwohl die gezeigte Form der Verdrehsicherungsrippen bevorzugt ist, können die Verdrehsicherungsmerkmale auch anders ausgelegt sein. Sie können beispielsweise durch Nasen gebildet werden, die auf der konusförmigen Fläche oder auf der gekrümmten Fläche der Ringnut 22 angeordnet sind, wobei die Nasen beispielsweise nur auf der einen Flanke 36 Ringnut 21 oder nur auf der anderen Flanke, d.h. im gerundeten Bereich der Ringnut 21 radial innerhalb des Wulstes 32 oder nur im Bodenbereich der Ringnut vorgesehen sein können. Darüber hinaus können die Verdrehsicherungsmerkmale durch Vertiefungen in den Flanken und/oder in der Bodenfläche der ringförmigen Nut gebildet werden, wie beispielsweise durch die gestrichelte Linie 84 in Fig. 3 dargestellt ist, wobei dann das Blechmaterial in die Verdrehsicherungsnuten hinein geformt wird.

Durch die Verdrängung des Blechmaterials durch den Ringvorsprung wird das Material auch radial nach innen gegen den Scheitel der ringförmigen Wulst getrieben, so dass ein Ringzeh 86 entsteht, der in Fig. 3 auf der Unterseite des Ringwulstes angeordnet ist.

Dadurch, dass der Ringwulst 32 radial in das Blechmaterial hineinragt, wird ausgezeichneter Auszieh-/Ausdrückwiderstand erreicht.

Man sieht ferner aus der Fig. 3, dass die Ringfläche 66 der Matrize 60 zumindest im Wesentlichen in der Ebene der unteren Stirnseite 28 des Stanzabschnittes zu liegen kommt. Dies bedeutet, dass in der Anschraubsituation, in der ein weiteres Bauteil von unten an das Blechteil 22 angeschraubt wird, keine besonderen Maßnahmen ergriffen werden müssen, um sicherzugehen, dass das Blechteil 22 zwischen der ringförmigen Anlagefläche 20 und dem angeschraubten Bauteil geklemmt ist. Würde der Stanzabschnitt 18 des Funktionselements 10 weiter nach unten ragen als die untere Seite des Bauteils 22 in Fig. 3, dann müsste beispielsweise eine entsprechende Vertiefung im anzuschraubenden Bauteil vorgesehen werden, um sicherzugehen, dass die Klemmkräfte zwischen dem Funktionselement 10 und dem angeschraubten Bauteil über das Blechteil 22 wirken und zu verhindern, dass das Blechteil sozusagen lose zwischen dem Körperabschnitt 16 des Funktionselements und dem angeschraubten Bauteil liegt, was der Fall wäre, wenn das Bauteil sich nur am unteren Ende des Stanzabschnitts 18 abstützen würde.

Die Fig. 3 zeigt die Anschraubsituation mit einem relativ dicken Blechteil 22. Wird ein noch dickeres Blechteil verwendet, so kann das überschüssige Blechmaterial die Ringvertiefung 34 noch weiter ausfüllen, wodurch eine noch festere Anbringung des Funktionselements am Blechteil 22 ermöglicht ist, denn auch die Unterseite der Ringvertiefung liegt dann formschlüssig an das Blechmaterial an und erhöht somit den Wert des Auszieh-/Ausdrückwiderstands. Durch die erhöhte Reibungsfläche zwischen dem Blechmaterial wird auch der Verdrehsicherungswiderstand erhöht.

Wird aber ein dünneres Blechteil verwendet, so entsteht kein Ringzeh 86, sondern das Blechmaterial greift in die Ringnut 21 nur im Bereich oberhalb des Ringwulstes 32 ein.

Da auch hier eine gute Überdeckung zwischen den Verdrehsicherungsrippen und dem Blechmaterial bzw. zwischen den Verdrehsicherungsmerkmalen und dem Blechmaterial gegeben ist, wenn die Verdrehsicherungsmerkmale durch Nasen und/oder Vertiefungen gebildet sind, wird auch bei dünnen Blechen ein sehr guter Verdrehsicherungswiderstand erreicht.

Auch bei dieser Ausführungsform ist aber ein guter Ausziehwiderstand bzw. Auspresswiderstand erreichbar, da der Wulst 32 nunmehr auf der Unterseite des in die Ringnut 21 hinein verformten Blechmaterials greift.

Man sieht aus dieser Erläuterung, dass ein und dasselbe Funktionselement für Blechteile mit verschiedenen Dicken verwendet werden kann, was die Lagerhaltung und schließlich auch die Herstellungskosten senkt.

Für die verschiedenen Blechdicken müssen lediglich andere Matrizen vorgesehen werden, deren Ringvorsprünge so bemessen sind, dass das Blechmaterial stets in die Ringnut 22 hinein und um den Ringwulst 32 herum fließt. Durch Bestimmung des Übermaßes, um das die untere Stirnseite des Gehäuses 74 des Setzkopfes 70 nach unten unterhalb der ringförmigen Anlagefläche 20 des Funktionselements ragt, kann auch sichergestellt werden, dass in der Einbausituation die Unterseite des Blechteils stets in etwa in der Ebene der Stirnfläche 28 des Funktionselements oder leicht darunter liegt. Gegebenenfalls kann mit sehr dünnen Blechteilen auch mit Scheiben gearbeitet werden, die zwischen dem Blechteil 22 und dem anzuschraubenden Bauteil angeordnet werden, um sicherzustellen, dass das Blechteil 22 stets ordnungsgemäß zwischen dem Körperteil 16 des Funktionselements 10 und dem angeschraubten Bauteil geklemmt ist. Handelt es sich bei dem anzuschraubenden Bauteil um einen Gehäuseflansch oder dergleichen, kann der Flansch, für den Fall, dass der Stanzabschnitt unterhalb der Unterseite des Blechteils vorsteht, mit einem abgestuften Bohrung versehen werden, die den Stanzabschnitt aufnimmt und auch hier dafür sorgt, dass das Blechteil ordnungsgemäß über das Bauteil zwischen dem Körperabschnitt 16 des Funktionselements 10 und dem Kopf der verwendeten Schraube geklemmt ist.

Bei allen diesen Ausführungsformen wird das Blechmaterial im Bereich des Befestigungselements radial außerhalb einer durch den Ringvorsprung 64 der Matrize verursachten Vertiefung 88 plan gedrückt. Ferner wird das Blechmaterial zu einem den Wulst 32 mindestens teilweise umgebenden Ringgraben 90 umgeformt.

Die Fig. 4 zeigt eine alternative Darstellung eines erfindungsgemäßen Funktionselements, das in diesem Beispiel an einem relativ dünnen Blechteil angebracht ist.

Das Funktionselement gemäß Fig. 4 weicht insofern vom Funktionselement gemäß den bisherigen Ausführungsformen ab, als der Körperabschnitt 16 hier nicht mit einem radial vorstehenden Flanschteil 40 versehen ist. Ferner erstreckt sich der Befestigungsabschnitt 12 des Funktionselements gemäß Fig. 4 hier nicht nur innerhalb des Körperabschnitts 16, sondern auch in den Stanzabschnitt 18 hinein, so dass der zylinderförmige Hohlraum 48 gemäß Fig. 1 hier fehlt und das Gewinde 12 ist an seinem unteren Ende lediglich durch eine Konusfläche 46 begrenzt. Die ringförmige Schneidkante 30 geht in diesem Beispiel nicht über eine Zylinderfläche in die Ringvertiefung 34 über, sondern über eine Konusfläche, die zumindest im Wesentlichen parallel zu der Konusfläche 46 verläuft.

Durch eine geeignete Formgebung des Gehäuses des Setzkopfes (hier nicht gezeigt) sowie des Stirnendes der Matrize (ebenfalls nicht gezeigt) wird das Blechmaterial bei dieser Ausführungsform zu einer deutlichen konusförmigen Ausformung 92 umgeformt, die für eine sehr steife Anbindung des Funktionselements 10 am Blechteil 22 sorgt und darüber hinaus sicherstellt, dass die Unterseite 96 des Blechteils leicht unterhalb der unteren Stirnfläche 28 des Stanzabschnittes 18 des Funktionselements liegt. Zwar verlaufen hier in der Anschraubsituation die Klemmkräfte, die zwischen Funktionselement 10 und einem von unten angeschraubten Bauteil erzeugt werden, durch die konusförmige Ausformung 92 des Blechteils 22 hindurch. Dies ist aber dennoch eine sehr stabile Anordnung, da die Klemmkräfte versuchen, das Blechteil 22 im Bereich der konusförmigen Ausformung 92 flacher zu pressen, wodurch dieser Bereich versteift wird und insgesamt eine sehr steife Anbindung vorliegt. Es ist auch möglich, wie ebenfalls in Fig. 4 gezeigt, das anzuschraubende Bauteil 94 mit einer entsprechenden Formgebung 96 im Bereich der ausgeprägten Ringvertiefung der konusförmigen Ausformung zu versehen und das Bauteil mit einer Schraube 100 an das Blechteil anzubringen.

Man sieht auch aus Fig. 4, dass es stets möglich ist, bei geeigneter Wahl der Form des Ringvorsprungs der Matrize dafür zu sorgen, dass Blechmaterial den ringförmigen Wulst 32 umgibt und auch in die Ringvertiefung 34 hinein geformt wird, wodurch die oben erwähnten Verdrehsicherungs- und Auszieh- bzw. Ausdrückwiderstandswerte erhöht werden können.

Es ist in Fig. 4 auch schematisch angezeigt, wie ein Bauteil 94' auf der Oberseite des Funktionselements angeschraubt werden kann, was grundsätzlich auch möglich ist.

Dadurch, dass bei diesem Funktionselement der Stanzabschnitt 18 des Funktionselements bei der Anbringung des Blechteils 22 nicht verformt wird, ist nicht zu befürchten, dass der Befestigungsabschnitt, beispielsweise das Gewinde 12 während der Anbringung verformt wird, weshalb sich das Gewinde 12 ohne weiteres in den Stanzabschnitt 18 hinein erstrecken kann.

Bei der nicht erfindungsgemässen Darstellung gemäß Fig. 5 ist keine Ringvertiefung vorgesehen, sondern ist der Stanzabschnitt 18 im unteren Bereich zumindest im Wesentlichen zylinderförmig. Der Durchmesser der ringförmigen Schneidkante 30 ist deutlich kleiner als der Durchmesser der gedachten Zylinderfläche 106, an der die Scheitelpunkte 31 des Ringwulstes 32 liegen. Auch hier kann durch eine geeignete Form des Ringvorsprungs der Matrize sichergestellt werden, dass das Blechmaterial im Bereich zwischen dem Ringvorsprung 64 der Matrize 60 und dem Ringwulst 32 nicht unnötig verdünnt und geschwächt wird.

Mit einer der Matrize 60 ähnlichen Matrize (nicht gezeigt) wird in der nicht erfindungsgemässen Darstellung gemäß Fig. 5 das Blechteil zwischen der Schneidkante 30 und dem Ringvorsprung 64, der einen Durchmesser größer als den des Ringwulstes 32 aufweist, zunächst zu einer konusförmigen Vertiefung gezogen und anschließend wird der Stanzbutzen aus dem Bodenbereich der konusförmigen Vertiefung herausgetrennt. Daraufhin schiebt der Ringvorsprung 64 das Blechmaterial, das oben am Ringvorsprung abgestützt ist, in die axiale Ringnut 21 hinein sowie mit einer vorzugsweise schräg nach innen weisenden Flanke gegen den Scheitel des Ringwulstes. Die Verdrehsicherungsrippen führen außerdem zu einer Verdrängung des Blechmaterials in den sich radial erstreckenden Bereich der axialen Ringnut 21 oberhalb des Ringwulstes 32 hinein.

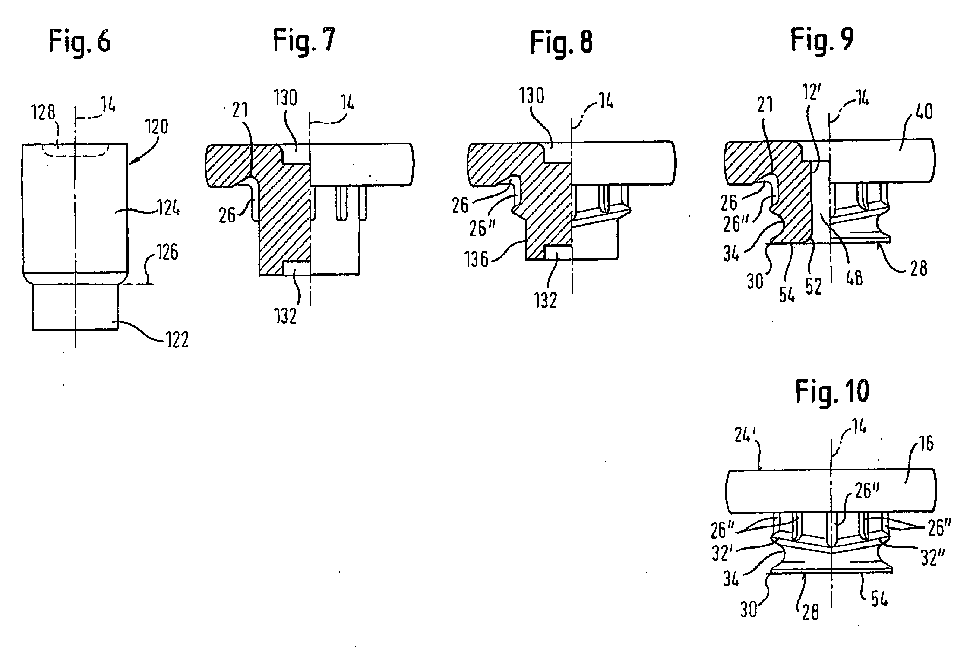

Es wird nunmehr anhand der Fig. 6 bis 10 erläutert, wie ein Funktionselement 10 der oben beschriebenen Art hergestellt werden kann. Zwar befasst sich diese Beschreibung mit einer leicht abgeänderten Form des Funktionselements der Fig. 4, das für sich in Fig. 10 gezeigt ist, die Beschreibung gilt aber auch für alle weiteren bisher beschriebenen Ausführungsvarianten.

Bevor die Herstellungsschritte der Fig. 6 bis 9 erörtert werden, ist es angebracht, die konkrete Ausführung gemäß Fig. 10 näher zu erläutern.

Bei dieser Erläuterung werden die gleichen Bezugszeichen für Merkmale oder Teile verwendet, die die gleiche Form oder Funktion haben, wie in den bisherigen Ausführungsformen und es versteht sich, dass die bisherige Beschreibung (wie bei allen Figuren) genauso für solche Merkmale oder Teile gilt, es sei denn, dass etwas anderes zum Ausdruck gebracht wird.

Die Besonderheit des Funktionselements der Fig. 10 liegt einerseits darin, dass der Körperabschnitt 16 zumindest im Wesentlichen die Form des Körperabschnitts 16 der Ausführung gemäß Fig. 4 aufweist, dass aber der ringförmige Wulst 32 hier aus vier ineinander gehende Gewindeabschnitte 32', 32" besteht, wobei die zwei weitere Gewindeabschnitte nicht zu sehen, sind da sie auf der Hinterseite des in Fig. 10 dargestellten Elements 10 liegen.

Wie aus der Fig. 10 ersichtlich, ist der ringförmige Wulstabschnitt 32' auf der linken Seite der Symmetrieachse (in diesem Fall die Längsachse 14 des Funktionselements) als Linksgewindeabschnitt ausgebildet und erstreckt sich über 90° um die Symmetrieachse herum, während auf der rechten Seite der Symmetrieachse 14 der ringförmige Wulst als Rechtsgewindeabschnitt ausgebildet ist, der ebenfalls über einen Winkel von 90° um die mittlere Längsachse verläuft.

Auf der Rückseite des Funktionselements in Fig. 10 ist auf der linken Seite der ringförmige Wulst 32 als Rechtsgewindeabschnitt und auf der rechten Seite als Linksgewindeabschnitt, in beiden Fällen über einen Winkelbetrag um die Mittellängsachse 14 von 90°, gebildet. Das heißt, der Wulst stellt sich auch hier als geschlossener Ring dar, aber mit einer Art Wellenform in Umfangsrichtung.

Dies führt dazu, dass die sich axial erstreckenden Teile 26" der Verdrehsicherungsrippen 26 die sich bis zum Boden der Ringnut 21 (siehe auch Fig.5), unterschiedlich lang ausfallen, was leicht anhand der Fig. 10 zu erkennen ist.

Obwohl der ringförmige Wulst 32 in der bisherigen Beschreibung als geschlossener Ring ausgebildet ist, ist dies nicht zwingend erforderlich. Der ringförmige Wulst könnte durch Wulstabschnitte gebildet sein, die voneinander in Umfangsrichtung beabstandet sind (nicht gezeigt). Dies würde auch zu einer Vergrößerung der Verdrehsicherung führen.

Auch könnte der ringförmige Wulst 32 nur durch Abschnitte von Linksgewinden oder Rechtsgewinden gebildet werden, die überlappend oder mit Abstand um den Umfang des Stanzabschnitts gelegt sind.

Zur Herstellung eines Funktionselements gemäß Fig. 10 wird zunächst ein zylinderförmiger Rohling 120 gemäß Fig. 6 genommen und in einer ersten Kaltschlagstufe so verformt, dass der zylinderförmige Rohling die Form annimmt, die mit durchgehenden Linien in Fig. 6 gezeigt ist, d.h. der zylinderförmige Rohling in Fig. 6 behält im unteren Bereich 122 seinen ursprünglichen Durchmesser, wird aber im Bereich oberhalb der Ebene 126 zu einem dickeren Zylinder 124 ausgebildet, und zwar mit einer Vertiefung 128 im oberen Ende des Zylinders. Diese Form kann dann durch weitere Kaltschlagschritte noch näher an die Umhüllungsform gemäß Fig. 7 gebracht werden, wobei die sich axial erstreckende Ringnut 21 mit den Verdrehsicherungsrippen 26 gemäß Fig.7 ausgebildet wird und eine deutliche Vertiefung oder ein Napf 130, 132 in der oberen Stirnseite bzw. in der unteren Stirnseite des Rohlings gebildet wird. Die entsprechenden Näpfe 130, 132 können in mehreren Schritten ausgehend von der Fig. 6 hergestellt werden oder, wenn das Material es erlaubt, nur in einem Schritt ausgehend von der Fig. 6, in die Form gemäß Fig. 7 gebracht werden. Danach findet ein weiterer Stauchvorgang statt, der zur Ausbildung des Ringwulstes 32 gemäß Fig. 8 führt. Der besondere Verlauf des Ringwulstes gemäß Fig. 8, der dem Verlauf gemäß Fig. 10 entspricht, wird einerseits durch die Formgebung des Kaltschlagwerkzeugs, das von unten kommend in Fig. 8 in die axiale Richtung bewegt wird, kann aber auch, falls erforderlich, durch Werkzeugsegmente begünstigt werden, die in radialer Richtung zwischen dem ringförmigen Auflageflansch und dem Ringwulst eingreifen und auch eine entsprechende Formgebung aufweisen.

In einem weiteren Schritt wird dann der Bereich zwischen den zwei Näpfen 130, 132 durchstoßen, um den Zylinderbereich 12'. gemäß Fig. 9 zu erzeugen, der später mit einem Gewinde versehen wird.

Im gleichen Schritt oder getrennt davon, wird auch der Zylindervorsprung 136 der Fig. 8 durch das Kaltschlagwerkzeug so verstaucht, dass die ringförmige Schneidkante 130 und die Ringvertiefung 34 gemäß Fig. 9 entstehen. Man sieht aus Fig. 9, dass der Außendurchmesser der ringförmigen Schneidkante 30 etwas kleiner ist als der Durchmesser des gedachten Zylinders (106 - nur in Fig. 5 gezeigt) an der der Scheitel 31 des Ringwulstes 32 liegt. Dies ist auch eine durchaus zulässige Ausbildung des Funktionselements, da durch die Formgebung der Matrize 60 und insbesondere des Ringvorsprungs 64 sichergestellt werden kann, dass das Blechmaterial im Bereich des Ringwulstes von der Matrize nicht durchschnitten wird.

Möglich ist es aber auch, dass der Kaltschlagvorgang, der zur Ausbildung der ringförmigen Schneidkante 30 führt, die Ausbildung gemäß Fig. 10 erzeugt, wo der Außendurchmesser der ringförmigen Schneidkante etwasgrößer ist als der Durchmesser des genannten Zylinders 106 an der der Scheitel 31 des Ringwulstes 32 liegt. Dies vermeidet, wie aus der Fig. 3 ersichtlich, dass der Ringvorsprung das Blechmaterial im Bereich zwischen der Kante 30 und dem Scheitel 31 des Ringwulstes 32 zu sehr verdünnt.

Schließlich soll darauf hingewiesen werden, dass für das Blechteil alle Stahl- oder Aluminium- oder Magnesiumblechteile in Frage kommen, die Tiefziehqualitäten aufweisen, während für das Funktionselement etwas festere Werkstoffe verwendet werden.

Bei allen Ausführungsformen können auch als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Funktionselement (10) mit einer Längsachse (14), mit einem Körperabschnitt (16), mit einem hohlen Stanzabschnitt (18), mit einer ringförmigen Auflagefläche (20) am Körperteil, die sich im Wesentlichen senkrecht zu der Längsachse (14) und vom Stanzabschnitt (18) radial weg erstreckt, und mit einer sich axial erstreckenden Ringnut (21), die im Körperabschnitt radial innerhalb der Auflagefläche (20) vorgesehen ist, wobei das Funktionselement (10) zur Anbringung an ein zumindest im Bereich der Anbringung plattenförmiges Bauteil (22), insbesondere an ein Blechteil ausgelegt ist, der Körperäbschnitt (16) auf der dem Stanzabschnitt abgewandten Seite eine Andruckfläche (24) aufweist und Verdrehsicherungsrippen (26) vorzugsweise vorgesehen sind, die die Ringnut (21) mindestens teilweise überqueren, und das freie Ende des Stanzabschnitts mit einer ringförmigen Schneidkante (30) versehen ist,
**dadurch gekennzeichnet,**
**dass** ein ringförmiger Wulst (32) am Stanzabschnitt (18) zwischen der ringförmigen Auflagefläche (20) und dem freien Ende (28) des Stanzabschnitts (18) vorgesehen ist und dass zwischen dem Wulst (32) und dem freien Stirnende (28) des Stanzabschnitts eine Ringvertiefung (34) um den Stanzabschnitt herum vorgesehen ist.

2. Funktionselement nach Anspruch 1,
**dadurch gekennzeichnet,**
**dass** die ringförmige Schneidkante (30) entweder radial weiter nach außen ragt als der Scheitel (31) der Wulst (32), oder gleich weit nach außen ragt oder weniger weit nach außen ragt, d.h., dass der Durchmesser der ringförmigen Schneidkante (30) größer, kleiner oder gleich groß ist wie die maximale Querabmessung des Wulstes (32), d.h. wie der Durchmesser eines gedanklichen Zylinders (106), an dessen Oberfläche der Scheitel (31) des Wulstes (32) liegt.

3. Funktionselement nach Anspruch 1 oder 2,
**dadurch gekennzeichnet,**
**dass** die Ringnut (21) über eine zumindest im Wesentlichen konusförmige Fläche (36) in die ringförmige Auflagefläche (20) ausläuft.

4. Funktionselement nach einem der vorhergehenden Ansprüche,
**dadurch gekennzeichnet,**
**dass** der ringförmige Wulst (32) in einer axialen Schnittebene gesehen eine zumindest im Wesentlichen dreieckige Form aufweist.

5. Funktionselement nach einem der vorhergehenden Ansprüche,
**dadurch gekennzeichnet,**
**dass** die Ringvertiefung (34) sich radial innerhalb des ringförmigen Wulstes (32) erstreckt und vorzugsweise auf der dem freien Stirnende (28) des Stanzabschnitts (18) abgewandten Seite vom ringförmigen Wulst (32) begrenzt ist.

6. Funktionselement nach einem der vorhergehenden Ansprüche,
**dadurch gekennzeichnet,**
**dass** die Ringvertiefung (34) in einer axialen Schnittebene gesehen zumindest im Wesentlichen U-förmig ist und vorzugsweise zumindest im Wesentlichen die Form eines Halbkreises aufweist.

7. Funktionselement nach Anspruch 1,
**dadurch gekennzeichnet,**
**dass** es als hohles Befestigungselement ausgebildet ist und einen zur Aufnahme eines Bolzens vorgesehenen Befestigungsabschnitt (13) aufweist.

8. Funktionselement nach einem der vorhergehenden Ansprüche,
**dadurch gekennzeichnet,**
**dass** der Körperabschnitt (16) einen Flanschabschnitt (40) aufweist, wobei die ringförmige Auflagefläche (20) und die sich axial erstreckende Ringnut (21) am bzw. im Flanschabschnitt (40) auf dessen dem Stanzabschnitt (18) zugewandten Seite vorgesehen sind.

9. Funktionselement nach einem der vorhergehenden Ansprüche,
**dadurch gekennzeichnet,**
**dass** die ringförmige Schneidkante (30) am freien Ende des Stanzabschnitts (18) den Übergang zwischen einer Zylinderfläche (56) an der Außenseite des Stanzabschnitts (18) und einer ringförmigen Stirnseite (54) des Stanzabschnitts (18) bildet, wobei die Zylinderfläche (56) vorzugsweise eine Zylinderfläche eines Kreiszylinders ist, und/oder dass eine ringförmige Diskontinuität sich zwischen der Zylinderfläche (56) und der U-förmigen Ringvertiefung (34) befindet.

10. Funktionselement nach einem der Ansprüche 1 bis 8,
**dadurch gekennzeichnet,**
**dass** die ringförmige Schneidkante (30) am freien Ende des Stanzabschnitts (18) den Übergang zwischen einer konusförmigen sich in Richtung des Flanschabschnittes verjüngende Fläche an der Außenseite des Stanzabschnitts (18) und einer ringförmigen Stirnseite (54) des Stanzabschnitts (18) bildet, wobei entweder eine ringförmige Diskontinuität sich zwischen der konusförmigen Fläche und der U-förmigen Ringvertiefung (34) befindet oder die konusförmige, sich in Richtung des Flanschabschnittes verjüngende Fläche stetig ohne Diskontinuität in die U-förmige Ringvertiefung (34) übergeht.

11. Funktionselement nach einem der vorhergehenden Ansprüche,
**dadurch gekennzeichnet,**
**dass** die axiale Länge zwischen dem Scheitelpunkt (31) des Wulstes (32) und der freien Stirnseite (28) des Stanzabschnittes (18) im Bereich zwischen 1 und 4 mm liegt, und/oder dass der axiale Abstand zwischen dem Scheitelpunkt (31) des Wulstes (32) und dem ringförmigen Abschnitt (20) der Auflagefläche, der in einer Ebene senkrecht zur Längsachse (14) liegt, im Bereich zwischen 0,2 und 2 mm liegt, und/oder dass die radiale Tiefe der Ringvertiefung (34) vom Scheitelpunkt (31) des Wulstes (32) gemessen im Bereich zwischen 0,5 und 2 mm liegt, und/oder dass die axiale Länge der Zylinderfläche (56) 0,3 bis 2 mm beträgt, und/oder dass die axiale Länge der konusförmigen Fläche 0,3 bis 2 mm beträgt.

12. Funktionselement nach einem der vorhergehenden Ansprüche,
**dadurch gekennzeichnet,**
**dass** in der Ringnut (21) Verdrehsicherungsrippen (26) vorgesehen sind, und/oder dass die Bodenfläche der Ringnut (21) auf mindestens einem Teil ihrer radialen Erstreckung mit Verdrehsicherungsnasen (26) und/oder Verdrehsicherungsnuten (84) versehen ist, und/oder dass die Verdrehsicherungsrippen (26) die umlaufende Ringnut (21) überbrücken, wobei vorzugsweise die Verdrehsicherungsrippen (26) bzw. -nasen in axialer Richtung nicht über den ringförmigen Abschnitt (20) der Auflagefläche vorstehen, die in einer Ebene senkrecht zur Längsachse liegt und vorzugsweise gegenüber dieser leicht zurückversetzt sind.

13. Funktionselement nach einem der vorhergehenden Ansprüche,
**dadurch gekennzeichnet,**
**dass** Verdrehsicherungsrippen (26) vorgesehen sind, die sich erhaben innerhalb der Ringnut (21) in axialer Richtung bis zum Wulst (32) erstrecken, d.h. zumindest im Wesentlichen eine rechtwinkelige Form mit zwei Schenkeln aufweisen, wobei vorzugsweise die sich axial erstreckenden Abschnitte (26') der Verdrehsicherungsrippen (26) in radialer Richtung nicht über den Scheitelpunkt (31) des Wulstes (32) vorstehen und vorzugsweise im Bezug auf dem Scheitelpunkt (31) leicht radial zurückversetzt angeordnet sind.

14. Funktionselement nach einem der vorhergehenden Ansprüche,
**dadurch gekennzeichnet,**
**dass** der ringförmige Wulst (32) die Form mindestens einer Windung eines Gewindes aufweist und/oder dass der Wulst (32) die Form von mindestens zwei Abschnitten (32', 32") einer Windung eines Gewindes aufweist, und insbesondere dass der Wulst (32) die Form von Abschnitten (32', 32") einer Windung eines Linksgewindes und einer Windung eines Rechtsgewindes aufweist, die abwechselnd um die Längsachse (14) herum angeordnet sind, wobei die Windungsabschnitte (32', 32") vorzugsweise aneinander angeschlossen sind und einen geschlossenen Ring bilden, und insbesondere dass insgesamt vier Windungsabschnitte (32', 32") vorgesehen sind.

15. Zusammenbauteil bestehend aus einem Blechteil (22) und mindestens einem Funktionselement (24) mit einer Längsachse (14), mit einem Körperabschnitt (16), mit einem hohlen Stanzabschnitt (18), mit einer ringförmigen Auflagefläche (20) am Körperabschnitt, die sich im Wesentlichen senkrecht zu der Längsachse und vom Stanzabschnitt radial weg erstreckt, und mit einer sich axial erstreckenden Ringnut (21), die im Körperabschnitt radial innerhalb der Auflagefläche (20) vorgesehen ist, wobei das Funktionselement zur Anbringung an ein zumindest im Bereich der Anbringung plattenförmiges Bauteil (22), insbesondere an ein Blechteil ausgelegt ist, der Körperabschnitt auf der dem Stanzabschnitt abgewandten Seite eine Andrückfläche (24) aufweist, Verdrehsicherungsrippen (26) vorzugsweise vorgesehen sind, die die Ringnut (21) mindestens teilweise überqueren, und das freie Ende (28) des Stanzabschnitts (18) mit einer ringförmigen Schneidkante (30) versehen ist,
**dadurch gekennzeichnet,**
**dass** ein ringförmiger Wulst (32) am Stanzabschnitt (18) zwischen der ringförmigen Auflagefläche (20) und dem freien Ende (28) des Stanzabschnitts (18) vorgesehen ist; dass zwischen dem Wulst (32) und dem freien Stirnende (28) des Stanzabschnitts (18) eine Ringvertiefung (34) um den Stanzabschnitt herum vorgesehen ist; dass Material des Blechteils (22) an der Anlagefläche (20) anliegt und zumindest im Wesentlichen die Ringnut (21) ausfüllt und das Blechteil im Bereich des Stanzabschnittes eine Lochung aufweist, durch die der Stanzabschnitt (18) sich hindurch erstreckt, wobei der Wulst (32) in einer ringförmigen Nut (90) im Rand der Lochung aufgenommen ist; und dass das Blechmaterial die Ringvertiefung (34) mindestens teilweise ausfüllt.

16. Zusammenbauteil nach Anspruch 15,
**dadurch gekennzeichnet,**
**dass** das Blechteil (22) um die Lochung herum und auf der der Auflagefläche (20) abgewandten Seite eine ringförmige Vertiefung (88) aufweist, und/oder dass das Blechteil (22) um die Lochung herum und auf der der Auflagefläche (20) abgewandten Seite einen ringförmigen Vorsprung (86) aufweist, der mindestens teilweise den Wulst (32) umgibt und dass eine ringförmige Vertiefung (90) den ringförmigen Vorsprung (86) umgibt, und/oder dass die ringförmige Vertiefung (90) im Blechteil von einer planen Fläche (96) umgeben ist, die in einer Ebene senkrecht zur Längsachse (14) des Befestigungselementes liegt.

17. Zusammenbauteil nach Anspruch 16,
**dadurch gekennzeichnet,**
**dass** der Körperabschnitt (16) einen Flanschabschnitt (40) aufweist, wobei die ringförmige Auflagefläche (20) und die sich axial erstreckende Ringnut (21) am bzw. im Flanschabschnitt (40) auf dessen dem Stanzabschnitt (18) zugewandten Seite vorgesehen sind und dass die plane Fläche (96) mindestens teilweise dem Flanschabschnitt (40) und der ringförmigen Auflagefläche (20) gegenüberliegt.

18. Zusammenbauteil nach einem der Anspruch 15 bis 17,
**dadurch gekennzeichnet,**
**dass** die Ringnut (21) sich radial innerhalb des ringförmigen Wulstes (32) erstreckt, bzw. auf der Stanzabschnittseite vom ringförmigen Wulst (32) begrenzt ist und dass das Blechmaterialteil auch diesen Bereich der Ringnut (21) ausfüllt und vorzugsweise dass die Ringnut (21) im Bereich radial innerhalb des ringförmigen Wulstes (32) in einer axialen Schnittebene zumindest im Wesentlichen die Form eines Halbkreises aufweist, und/oder dass der ringförmige Wulst (32) in einer axialen Schnittebene eine zumindest im Wesentlichen dreieckige Form aufweist und dass die ringförmige Nut (90) im Rand der Lochung die gleiche Form aufweist.

19. Zusammenbauteil nach einem der Ansprüche 15 bis 18,
**dadurch gekennzeichnet,**
**dass** die Ringvertiefung (34) in einer axialen Schnittebene betrachtet zumindest im Wesentlichen die Form eines Halbkreises aufweist und dass das Blechmaterial die Ringvertiefung mindestens teilweise ausfüllt.

20. Zusammenbauteil nach einem der Ansprüche 15 bis 19,
**dadurch gekennzeichnet,**
**dass** die Verdrehsicherungsrippen (26) sich erhaben innerhalb der Ringnut (21) in axialer Richtung bis zum Wulst erstrecken, d.h. zumindest im Wesentlichen eine rechtwinkelige Form mit zwei Schenkeln aufweisen und dass das Blechmaterial um beide Schenkel der Verdrehsicherungsrippen umgeformt ist, und/oder dass die sich axial erstreckenden Abschnitte (26') der Verdrehsicherungsrippen in radialer Richtung nicht über den Scheitel (31) des Wulstes (32) vorstehen und vorzugsweise leicht radial zurückversetzt zum Scheitel angeordnet sind, und/oder dass die sich axial erstreckenden Abschnitte (26') der Verdrehsicherungsrippen (26) in axialer Richtung nicht oder nur geringfügig über die ringförmige Auflagefläche (20) vorstehen.

21. Zusammenbauteil nach einem der Ansprüche 15 bis 20,
**dadurch gekennzeichnet,**
**dass** der ringförmige Wulst (32) die Form mindestens einer Windung eines Gewindes aufweist, und/oder dass der ringförmige Wulst (32) die Form von mindestens zwei Abschnitten (32', 32") einer Windung eines Gewindes aufweist und insbesondere dass der Wulst (32) die Form von Abschnitten (32', 32") einer Windung eines Linksgewindes und einer Windung eines Rechtsgewindes aufweist, die abwechselnd um die Längsachse (14) herum angeordnet sind, wobei die Windungsabschnitte (32', 32") vorzugsweise aneinander angeschlossen sind und einen geschlossenen Ring bilden und insbesondere dass insgesamt vier Windungsabschnitte (32', 32") vorgesehen sind.

22. Verfahren zur Herstellung eines Zusammenbauteils nach einem oder mehreren der Ansprüche 15 bis 21,
**gekennzeichnet durch** die folgenden Schritte:
a) das Blechteil (22) wird auf eine Matrize (60) abgestützt, die eine Bohrung (62) aufweist mit einem Durchmesser (D), der zur Aufnahme der ringförmigen Schneidkante (30) des Funktionselementes (10) ausgelegt ist, wobei die Bohrung (62) der Matrize (60) von einem Ringvorsprung (64) umgeben ist, die auf der der Bohrung radial abgewandten Seite in eine Fläche (66) senkrecht zur Längsachse (68) der Bohrung übergeht, wobei die Längsachse (68) der Bohrung zumindest im Wesentlichen mit der Längsachse (14) des Funktionselementes fluchtet,
b) das Funktionselement (10) wird in Richtung auf das Blechteil (22) und die darunter liegenden Matrize (60) zu bewegt und mit der ringförmigen Schneidkante (30) wird ein Stanzbutzen (80) aus dem Blechteil (22) herausgetrennt, der **durch** die Bohrung (62; 63) der Matrize aufgenommen bzw. **durch** diese hindurch entsorgt wird,
c) gleichzeitig mit dem Heraustrennen des Stanzbutzens (80) oder danach wird **durch** die Bewegung des Körperabschnitts (16) auf das Blechteil (22) und die Matrize (60) zu das Blechmaterial mittels des Ringvorsprungs (64) in die Ringnut (21) und um den Wulst (32) sowie mindestens teilweise in die Ringvertiefung (34) umgeformt, um eine formschlüssige Verbindung zwischen dem Blechteil (22) und dem Funktionselement (10) zu erzeugen.

23. Verfahren nach dem Anspruch 22,
**dadurch gekennzeichnet,**
**dass** bei der Umformung des Blechmaterials (22) durch den Ringvorsprung (64) das Blechmaterial auch um bzw. in die Verdrehsicherungsmerkmale bzw. -rippen (26) um- bzw. hineingeformt wird, und/oder dass mit der genannten Fläche (66) der Matrize, die senkrecht zur Längsachse (68) steht, das Blechmaterial (22) im Bereich des Befestigungselements radial außerhalb einer durch den Ringvorsprung (62) verursachten Vertiefung plan gedrückt wird, und/oder dass das Blechmaterial (22) zu einem den Wulst (32) umgebenden Ringkragen (86) umgeformt wird.

24. Verfahren zur Herstellung eines Funktionselementes (10) mit einer Längsachse (14), mit einem Körperabschnitt (16), mit einem hohlen Stanzabschnitt (18), mit einer ringförmigen Auflagefläche (20) am Körperabschnitt, die sich im Wesentlichen senkrecht zu der Längsachse (14) und vom Stanzabschnitt (18) radial weg erstreckt, und mit einer sich axial erstreckenden Ringnut (21), die im Körperabschnitt (16) radial innerhalb der Auflagefläche (20) vorgesehen ist, wobei der Körperabschnitt (16) auf der dem Stanzabschnitt (18) abgewandten Seite eine Andrückfläche (24) aufweist, Verdrehsicherungsrippen (26) vorzugsweise vorgesehen sind, die die Ringnut mindestens teilweise überqueren, und das freie Ende des Stanzabschnitts (18) mit einer ringförmigen Schneidkante (30) versehen ist, ein ringförmiger Wulst (32) am Stanzabschnitt (18) zwischen der ringförmigen Auflagefläche (20) und dem freien Ende des Stanzabschnitts (18) vorgesehen ist und zwischen dem Wulst (32) und dem freien Stirnende des Stanzabschnitts eine Ringvertiefung (34) um den Stanzabschnitt herum vorgesehen ist, insbesondere eines Funktionselements nach einem der Ansprüche 1 bis 14, durch Kaltverformung,
**gekennzeichnet durch** die folgenden Kaltverformungsschritte:
a) ein zunächst zylindrischer Rohling wird in einem oder mehreren Schritten zu einem Rohling (120) für das Funktionselement (10) gemacht, wobei das Stirnende des zylindrischen Abschnittes sowie das entgegengesetzte Ende des Rohlings jeweils zur Ausbildung von jeweiligen Näpfen (128; 132) genapft wird und der Körperabschnitt (18) mit der Ringnut (21) und ein zylindrischer Abschnitt (136), der später zum Stanzabschnitt (18) geformt wird, sowie ggf. Verdrehsicherungsmerkmale (26) im Bereich der Ringnut (21) und/oder am zylindrischen Abschnitt (136) hergestellt werden,
b) Material benachbart zum Stirnende des zylindrischen Abschnitts zur Ausbildung des ringförmigen Wulstes (32) bei Verkleinerung des Außendurchmessers des zylindrischen Abschnitts (136) im Bereich seines Stirnendes in Richtung auf die ringförmige Nut (21) zu verschoben wird, wobei bei Ausbildung des Wulstes (32) in Form einer Windung eines Gewindes oder mehrerer Abschnitte (32'; 32") eines Gewindes die Verdrehsicherungsrippen (26; 26") an ihren freien Enden mit verformt werden,
c) in einem weiteren Schritt das Stirnende des Funktionselements (10) verformt und im Durchmesser vergrößert wird, um die Schneidkante (30) am Stirnende des zylindrischen Abschnitts und zwischen dieser und dem Wulst eine ringförmige Nut (34) um den zylindrischen Abschnitt herum zu bilden,
d) der so fertig gestellte Rohling anschließend oder gleichzeitig mittels eines Lochstempels im Bereich zwischen den zwei Näpfen (130, 132) gelocht wird, wobei, falls erwünscht, der gelochte Bereich anschließend mit einem Gewinde versehen wird.

## Claims

1. A functional element (10) having a longitudinal axis (14), a body section (16), a hollow piercing section (18), a ring-like contact surface (20) at the body part, which extends substantially perpendicular to the longitudinal axis (14) and radially away from the piercing section (18) and an axially extending ring groove (21) which is provided in the body section radially inside the contact surface (20), with the functional element (10) being designed for attachment to a component (22) which is of plate-like shape at least in the region of the attachment, in particular to a sheet metal part, wherein the body section (16) has a pressing surface (24) at the side remote from the piercing section and wherein ribs (26) providing security against rotation are provided which at least partly cross the ring groove (21) and wherein the free end of the piercing section is provided with a ring-like cutting edge (30),
**characterized in that**
a ring-like bead (32) is provided at the piercing section (18) between the ring-like contact surface (20) and the free end (28) of the piercing section (18) and **in that** a ring recess (34) is preferably provided around the piercing section between the bead (32) and the free end face (28) of the piercing section.

2. A functional element in accordance with claim 1,
**characterized in that**
the ring-like cutting edge (30) either projects radially further outwardly than the apex (31) of the bead (32) or projects outwardly to the same extent or projects less far outwardly, i.e. that the diameter of the ring-like cutting edge (30) is larger than, smaller than or of the same size as the maximum transverse dimension of the bead (32), i.e. as the diameter of an imaginary cylinder (106) on the surface of which the apex (31) of the bead (32) lies.

3. A functional element in accordance with claim 1 or claim 2,
**characterized in that**
the ring groove (21) runs out via an at least substantially conical surface (36) into the ring-like contact surface (20).

4. A functional element in accordance with any one of the preceding claims,
**characterized in that**
the ring-like bead (32) has an at least substantially triangular shape when seen in an axial section plane.

5. A functional element in accordance with any one of the preceding claims,
**characterized in that**
the ring recess (34) extends radially within the ring-like bead (32) and is preferably bounded by the ring-like bead (32) at the side remote from the free end face (28) of the piercing section (18).

6. A functional element in accordance with any one of the preceding claims,
**characterized in that**
the ring recess (34) is at least substantially U-shaped when seen in an axial section plane and preferably has at least substantially the shape of a semi-circle.

7. A functional element in accordance with claim 1,
**characterized in that**
it is formed as a hollow fastener element and has a fastener section (13) provided for the reception of a bolt.

8. A functional element in accordance with any one of the preceding claims,
**characterized in that**
the body section (16) has a flange section (40), with the ring-like contact surface (20) and the axially extending ring groove (21) being provided at or in the flange section (40) at its side facing the piercing section (18).

9. A functional element in accordance with one of the preceding claims,
**characterized in that**
the ring-like cutting edge (30) at the free end of the piercing section (18) forms the transition between a cylinder surface (56) at the outer side of the piercing section (18) and a ring-like end face (54) of the piercing section (18), with the cylinder surface (56) preferably being a cylinder surface of a circular cylinder and/or **in that** a ring-like discontinuity is located between the cylinder surface (56) and the U-shaped ring recess (34).

10. A functional element in accordance with one of the claims 1 to 8,
**characterized in that**
the ring-like cutting edge (30) at the free end of the piercing section (18) forms the transition between a conical surface tapering in the direction of the flange section at the outer side of the piercing section (18) and a ring-like end face (54) of the piercing section (18), with either a ring-like discontinuity being located between the conical surface and the U-shaped ring recess (34) or the conical surface tapering in the direction of the flange section merging continuously without discontinuity into the U-shaped ring recess (34).

11. A functional element in accordance with one of the preceding claims,
**characterized in that**
the axial length between the apex point (31) of the bead (32) and the free end face (28) of the piercing section (18) lies in the range between 1 and 4 mm and/or **in that** the axial spacing between the apex point (31) of the bead (32) and the ring-like portion (20) of the contact surface which lies in a plane perpendicular to the longitudinal axis (14) lies in the range between 0.2 and 2 mm and / or **in that** the radial depth of the ring recess (34) measured from the apex point (31) of the bead (32) lies in the range between 0.5 and 2 mm and/or **in that** the axial length of the cylinder surface (56) amounts to 0.3 to 2 mm.

12. A functional element in accordance with one of the preceding claims,
**characterized in that**
ribs (26) providing security against rotation are provided in the ring groove (21) and / or **in that** the base surface of the ring groove (21) is provided on at least a part of its radial extent with noses (26) providing security against rotation and/or with grooves (84) providing security against rotation and/or **in that** the ribs (26) providing security against rotation bridge the peripherally extending ring groove (21), with the ribs (26) or noses providing security against rotation not projecting in the axial direction beyond the ring-like section (20) of the contact surface which lies in a plane perpendicular to the longitudinal axis and preferably being set back slightly relative to the latter.

13. A functional element in accordance with one of the preceding claims,
**characterized in that**
ribs (26) providing security against rotation are provided which extend in raised manner within the ring groove (21) in the axial direction up to the bead (32), i.e. at least substantially have a rectangular shape with two limbs, wherein the axially extending sections (26') of the ribs (26) providing security against rotation preferably do not project in the radial direction beyond the apex point (31) of the bead (32) and are preferably set back slightly radially with respect to the apex point (31).

14. A functional element in accordance with one of the preceding claims,
**characterized in that**
the ring-like bead (32) has the form of at least one turn of a thread and/or **in that** the bead (32) has the form of at least two sections (32', 32") of a turn of a thread and in particular **in that** the bead (32) has the form of sections (32', 32") of a turn of a left hand thread and of a turn of a right hand thread which are alternately arranged around the longitudinal axis (14), with the turn sections (32', 32") preferably being connected to one another and forming a closed ring and in total four turn sections (32', 32") are in particular provided.

15. A component assembly comprising a sheet metal part (22) and at least one functional element (24) having a longitudinal axis (14), a body section (16), a hollow piercing section (18), a ring-like contact surface (20) at the body part, which extends substantially perpendicular to the longitudinal axis (14) and radially away from the piercing section (18) and an axially extending ring groove (21) which is provided in the body section radially inside the contact surface (20), wherein the functional element is designed for attachment to a component (22) which is of plate-like shape at least in the region of the attachment, in particular to a sheet metal part, wherein the body section has a pressing surface (24) at the side remote from the piercing section and wherein ribs (26) providing security against rotation are provided which cross the ring groove (21) at least partly and wherein the free end (28) of the piercing section (18) is provided with a ring-like cutting edge (30),
**characterized in that**
a ring-like bead (32) is provided at the piercing section (18) between the ring-like contact surface (20) and the free end (28) of the piercing section (18); **in that** a ring recess (34) is preferably provided around the piercing section between the bead (32) and the free end face (28) of the piercing section (18);
**in that** material of the sheet metal part (22) contacts the contact surface (20) and at least substantially fills out the ring groove (21) and **in that** the sheet metal part has a piercing in the region of the piercing section through which the piercing section (18) extends, with the bead (32) being received in a ring-like groove (90) in the marginal zone of the piercing; and **in that** the sheet material at least partly fills out the ring recess (34).

16. A component assembly in accordance with claim 15,
**characterized in that**
the sheet metal part (22) has a ring-like recess (88) around the piercing and at the side remote from the contact surface (20) and/or
**in that** the sheet metal part (22) has a ring-like projection (86) around the piercing and at the side remote from the contact surface (20), with the ring-like projection at least partly surrounding the bead (32) and **in that** a ring-like recess (90) surrounds the ring-like projection (86) and/or **in that** the ring-like recess (90) in the sheet metal part is surrounded by a planar surface (96) which lies in a plane perpendicular to the longitudinal axis (14) of the fastener element.

17. A component assembly in accordance with claim 16,
**characterized in that**
the body section (16) has a flange section (40) with the ring-like contact surface (20) and the axially extending ring groove (21) being provided at or in the flange section (40) at its side facing the piercing section (18) and **in that** the planar surface (96) lies at least partly opposite to the flange section (40) and to the ring-like contact surface (20).

18. A component assembly in accordance with one of the claims 15 to 17, **characterized in that**
the ring groove (21) extends radially within the ring-like bead (32) or is bounded at the piercing section side by the ring-like bead (32) and **in that** the sheet metal material part also fills out this region of the ring groove (21) and preferably **in that**, in the region radially within the ring-like bead (32), the ring groove (21) has at least substantially the shape of the semi-circle in an axial section plane and/or **in that** the ring-like bead (32) has an at least substantially triangular shape in an axial section plane and **in that** the ring-like groove (90) has the same shape in the marginal zone of the piercing.

19. A component assembly in accordance with any one of the preceding claims 15 to 18, **characterized in that**
the ring recess (34), when considered in an axial section plane, has at least substantially the shape of a semi-circle and **in that** the sheet metal material at least partly fills out the ring recess.

20. A component assembly in accordance with any one of the claims 15 to 19, **characterized in that**
the ribs (26) providing security against rotation extend in raised manner within the ring groove (21) in the axial direction up to the bead, i.e. have an at least substantially rectangular shape with two limbs and **in that** the sheet metal material is formed around the two limbs of the ribs providing security against rotation and/or **in that** the axially extending sections (26') of the ribs providing security against rotation do not project in the radial direction beyond the apex (31) of the bead (32) and are preferably arranged set back slightly radially relative to the apex and/or **in that** the axially extending sections (26') of the ribs (26) providing security against rotation do not project in the axial direction beyond the ring-like contact surface (20) or only project fractionally beyond the ring-like contact surface (20).

21. A component assembly in accordance with any one of the claims 15 to 20, **characterized in that**
the ring-like bead (32) has the shape of at least one turn of a thread and/or **in that** the ring-like bead (32) has the shape of at least two sections (32', 32") of one turn of a thread and in particular **in that** the bead (32) has the form of sections (32', 32") of a turn of a left hand thread and of a turn of a right hand thread which are alternately arranged around the longitudinal axis (14), with the turn sections (32', 32") preferably being connected to one another and forming a closed ring and in particular a total of four turn sections (32', 32") are provided.

22. A method for the manufacture of a component assembly in accordance with one or more of the claims 15 to 21,
**characterized by** the following steps:
a) the sheet metal part is supported on a die button (60) which has a bore (62) having a diameter (D), which is designed to receive the ring-like piercing edge (30) of the functional element (10), with the bore (62) of the die button (60) being surrounded by a ring projection (64) which merges at the side radially remote from the bore into a surface (66) perpendicular to the longitudinal axis (68) of the bore, with the longitudinal axis (68) of the bore being at least substantially aligned with the longitudinal axis (14) of the functional element,
b) the functional element (10) is moved in the direction towards the sheet metal part (22) and the die button (60) lying beneath it and a piercing slug (80) is cut out from the sheet metal part (22) by the ring-like cutting edge (30), with the piercing slug being received by the bore (62; 63) of the die button or disposed of through it,
c) at the same time as the cutting out of the piercing slug (80) or thereafter, the sheet metal material is shaped into the ring groove (21) and around the bead (32) by the movement of the body part (16) towards the sheet metal part (22) and the die button (60) by means of the ring projection (64) in order to produce a form-locked connection between the sheet metal part (22) and the functional element (10).

23. A method in accordance with claim 22,
**characterized in that**,
on the shaping of the sheet metal material (22) by the ring projection (64), the sheet metal material is also formed around or into the features providing security against rotation, i.e. the ribs (26) providing security against rotation and/or **in that** the sheet metal material (22) in the region of the fastener element radially outside of a recess caused by the ring projection (62) is pressed flat by the said surface (66) of the die button which stands perpendicular to the longitudinal axis (68) and/or **in that** the sheet metal material is shaped into a ring collar (86) surrounding the bead (32).

24. A method for the manufacture by cold forming of a functional element (10), in particular a functional element in accordance with any one of the claims 1 to 14, the functional element having a longitudinal axis (14), a body section (16), a hollow piercing section (18), a ring-like contact surface (20) at the body part, which extends substantially perpendicular to the longitudinal axis (14) and radially away from the piercing section (18) and an axially extending ring groove (21) which is provided in the body section (16) radially inside the contact surface (20), wherein the body section (16) has a pressing surface (24) at the side remote from the piercing section (18) and wherein ribs (26) providing security against rotation are provided which cross the ring groove at least partly and wherein the free end of the piercing section (18) is provided with a ring-like cutting edge (30), wherein a ring-like bead (32) is provided at the piercing section (18) between the ring-like contact surface (20) and the free end of the piercing section (18) and wherein a ring recess (34) is provided around the piercing section between the bead (32) and the free end face of the piercing section,
**characterized by** the following cold forming steps:
a) an initially cylindrical blank is made in one or more steps into a blank (120) for the functional element (10) with the end face of the cylindrical portion and also the opposite end of the blank each being indented to form respective indents (128; 132) and the body part (18) with the ring groove (21) and a cylindrical section (136), which is later shaped into the piercing section (18), and also optionally features (26) providing security against rotation being produced in the region of the ring groove (21) and/or at the cylindrical section (136),
b) material adjacent to the end face of the cylindrical section is shifted in the direction towards the ring-like groove (21) to form the ring-like bead (32) while reducing the outer diameter of the cylindrical section (136) in the region of its end face, wherein, on the formation of the bead (32) in the form of a turn of a thread or of a plurality of sections (32'; 32") of a thread, the ribs (26; 26") providing security against rotation are also shaped at their free ends,
c) in a further step, the end face of the functional element (10) is deformed and enlarged in diameter in order to form the cutting edge (30) at the end face of the cylindrical section and a ring groove (34) around the cylindrical section between the end face of the cylindrical section and the bead,
d) the thus finished manufactured blank is subsequently pierced or is simultaneously pierced by means of a hole punch in the region between the two indents (130, 132) and, if desired, the pierced region is subsequently provided with a thread.

## Revendications

1. Elément fonctionnel (10) présentant un axe longitudinal (14), une portion formant corps (16), une portion poinçonnée creuse (18), une surface d'appui annulaire (20) sur la portion formant corps, qui s'étend sensiblement perpendiculairement à l'axe longitudinal (14) et radialement en éloignement de la portion poinçonnée (18), et une gorge annulaire (21) s'étendant axialement qui est prévue dans la portion formant corps radialement à l'intérieur de la surface d'appui (20), l'élément fonctionnel (10) étant conçu pour le montage sur un composant (22), en forme de plaque au moins dans la zone du montage, en particulier sur une pièce en tôle, la portion formant corps (16) présentant une surface de pressage (24) sur le coté détourné de la portion poinçonnée, et des nervures anti-rotation (26) étant de préférence prévues qui recoupent au moins partiellement la gorge annulaire (21), et l'extrémité libre de la portion poinçonnée étant pourvue d'une arête de coupe annulaire (30),
**caractérisé en ce que**
il est prévu un bourrelet annulaire (32) sur la portion poinçonnée (18) entre la surface d'appui annulaire (20) et l'extrémité libre (28) de la portion poinçonnée (18), et **en ce qu'**il est prévu, entre le bourrelet (32) et l'extrémité frontale libre (28) de la portion poinçonnée, un renfoncement annulaire (34) autour de la portion poinçonnée.

2. Elément fonctionnel selon la revendication 1,
**caractérisé en ce que**
l'arête de coupe annulaire (30) dépasse radialement plus loin vers l'extérieur que le sommet (31) du bourrelet (32), ou bien elle dépasse aussi loin vers l'extérieur ou encore elle dépasse moins loin vers l'extérieur, c'est-à-dire que le diamètre de l'arête de coupe annulaire (30) est supérieur, inférieur ou égal à la dimension transversale maximale du bourrelet (32), c'est-à-dire au diamètre d'un cylindre imaginaire (106) à la surface duquel se trouve le sommet (31) du bourrelet (32).

3. Elément fonctionnel selon la revendication 1 ou 2,
**caractérisé en ce que**
la gorge annulaire (21) se termine par la surface d'appui annulaire (20) via une surface (36) au moins sensiblement conique.

4. Elément fonctionnel selon l'une des revendications précédentes,
**caractérisé en ce que**
le bourrelet annulaire (32) présente, vu dans un plan de coupe axial, une forme au moins sensiblement triangulaire.

5. Elément fonctionnel selon l'une des revendications précédentes,
**caractérisé en ce que**
le renfoncement annulaire (34) s'étend radialement à l'intérieur du bourrelet annulaire (32) et est de préférence délimité par le bourrelet annulaire (32) sur le côté détourné de l'extrémité frontale libre (28) de la portion poinçonnée (18).

6. Elément fonctionnel selon l'une des revendications précédentes,
**caractérisé en ce que**
le renfoncement annulaire (34) est, vu dans un plan de coupe axial, au moins sensiblement en forme de U et présente de préférence au moins sensiblement la forme d'un demi-cercle.

7. Elément fonctionnel selon la revendication 1,
**caractérisé en ce que**
il est réalisé sous la forme d'un élément de fixation creux et comprend une portion de fixation (13) prévue pour recevoir un goujon.

8. Elément fonctionnel selon l'une des revendications précédentes,
**caractérisé en ce que**
la portion formant corps (16) présente un tronçon de bride (40), la surface d'appui annulaire (20) et la gorge annulaire (21) s'étendant axialement étant prévues sur ou dans le tronçon de bride (40) sur son côté tourné vers la portion poinçonnée (18).

9. Elément fonctionnel selon l'une des revendications précédentes,
**caractérisé en ce que**
l'arête de coupe annulaire (30) forme, à l'extrémité libre de la portion poinçonnée (18), la transition entre une surface cylindrique (56) sur le côté extérieur de la portion poinçonnée (18) et une face frontale annulaire (54) de la portion poinçonnée (18), la surface cylindrique (56) étant de préférence une surface cylindrique d'un cylindre circulaire, et/ou **en ce qu'**une discontinuité annulaire se trouve entre la surface cylindrique (56) et le renfoncement annulaire (34) en forme de U.

10. Elément fonctionnel selon l'une des revendications 1 à 8,
**caractérisé en ce que**
l'arête de coupe annulaire (30) forme, à l'extrémité libre de la portion poinçonnée (18), la transition entre une surface conique allant en se rétrécissant en direction du tronçon de bride sur le côté extérieur de la portion poinçonnée (18) et une face frontale annulaire (54) de la portion poinçonnée (18), en prévoyant soit une discontinuité annulaire entre la surface conique et le renfoncement annulaire (34) en forme de U, soit la surface conique allant en se rétrécissant en direction du tronçon de bride se transforme en continu, sans discontinuité, en le renfoncement annulaire (34) en forme de U.

11. Elément fonctionnel selon l'une des revendications précédentes,
**caractérisé en ce que**
la longueur axiale entre le point de sommet (31) du bourrelet (32) et la face frontale libre (28) de la portion poinçonnée (18) est dans la plage entre 1 et 4 mm, et/ou **en ce que** la distance axiale entre le point de sommet (31) du bourrelet (32) et le tronçon annulaire (20) de la surface d'appui, qui se trouve dans un plan perpendiculaire à l'axe longitudinal (14), est dans la plage entre 0,2 et 2 mm, et/ou **en ce que** la profondeur radiale du renfoncement annulaire (34), mesurée depuis le point de sommet (31) du bourrelet (32), est dans la plage entre 0,5 et 2 mm, et/ou **en ce que** la longueur axiale de la surface cylindrique (56) est de 0,3 à 2 mm, et/ou la longueur axiale de la surface conique est de 0,3 à 2 mm.

12. Elément fonctionnel selon l'une des revendications précédentes,
**caractérisé en ce que**
des nervures anti-rotation (26) sont prévues dans la gorge annulaire (21), et/ou **en ce que** la surface de fond de la gorge annulaire (21) est pourvue, sur une partie au moins de son extension radiale, de becs anti-rotation (26) et/ou de gorges anti-rotation (84), et/ou **en ce que** les nervures anti-rotation (26) coiffent la gorge annulaire périphérique (21), les nervures anti-rotation (26) ou les becs anti-rotation ne dépassant de préférence pas au-delà du tronçon annulaire (20) de la surface d'appui en direction axiale, surface qui se trouve dans un plan perpendiculaire à l'axe longitudinal et qui est de préférence légèrement en retrait par rapport à celui-ci.

13. Elément fonctionnel selon l'une des revendications précédentes,
**caractérisé en ce que**
il est prévu des nervures anti-rotation (26) qui s'étendent en surélévation à l'intérieur de la gorge annulaire (21) en direction axiale jusqu'au bourrelet (32), c'est-à-dire qui présentent au moins sensiblement une forme à angle droit avec deux bras, et de préférence les tronçons (26') des nervures anti-rotation (26), qui s'étendent axialement ne dépassent pas au-delà du point de sommet (31) du bourrelet en direction radiale et sont de préférence agencés légèrement en retrait radial par rapport au point de sommet (31).

14. Elément fonctionnel selon l'une des revendications précédentes,
**caractérisé en ce que**
le bourrelet annulaire (32) présente la forme d'au moins une spire d'un pas de vis, et/ou **en ce que** le bourrelet (32) présente la forme d'au moins deux tronçons (32', 32") d'une spire d'un pas de vis, et en particulier **en ce que** le bourrelet (32) présente la forme de tronçons (32', 32") d'une spire d'un pas à gauche et d'une spire d'un pas à droite, qui sont agencés en alternance autour de l'axe longitudinal (14), les tronçons de spire (32', 32") étant de préférence raccordés l'un à l'autre et formant un anneau fermé, et en particulier **en ce qu'**il est prévu au total quatre tronçons de spire (32', 32").

15. Composant d'assemblage constitué par une pièce en tôle (22) et par au moins un élément fonctionnel (24) présentant un axe longitudinal (14), une portion formant corps (16), une portion poinçonnée creuse (18), une surface d'appui annulaire (20) sur la portion formant corps, qui s'étend sensiblement perpendiculairement à l'axe longitudinal (14) et radialement en éloignement de la portion poinçonnée (18), et une gorge annulaire (21) s'étendant axialement qui est prévue dans la portion formant corps radialement à l'intérieur de la surface d'appui (20), l'élément fonctionnel (10) étant conçu pour le montage sur un composant (22), en forme de plaque au moins dans la zone du montage, en particulier sur une pièce en tôle, la portion formant corps présentant une surface de pressage (24) sur le côté détourné de la portion poinçonnée, et des nervures anti-rotation (26) étant de préférence prévues qui recoupent au moins partiellement la gorge annulaire (21), et l'extrémité libre (28) de la portion poinçonnée (18) étant pourvue d'une arête de coupe annulaire (30),
**caractérisé en ce que**
il est prévu un bourrelet annulaire (32) sur la portion poinçonnée (18) entre la surface d'appui annulaire (20) et l'extrémité libre (28) de la portion poinçonnée (18), et **en ce qu'**il est prévu, entre le bourrelet (32) et l'extrémité frontale libre (28) de la portion poinçonnée (18), un renfoncement annulaire (34) autour de la portion poinçonnée, **en ce que** le matériau de la pièce en tôle (22) prend appui contre la surface d'appui (20) et remplit au moins sensiblement la gorge annulaire (21) et la pièce en tôle présente dans la zone de la portion de poinçonnage une perforation qui est traversée par la portion poinçonnée (18), le bourrelet (32) étant reçu dans une gorge annulaire (90) dans le bord de la perforation, et **en ce que** le matériau de tôle remplit au moins partiellement le renfoncement annulaire (34).

16. Composant d'assemblage selon la revendication 15,
**caractérisé en ce que**
la pièce en tôle (22) présente un renfoncement annulaire (88) autour de la perforation et sur le côté détourné de la surface d'appui (20), et/ou **en ce que** la pièce en tôle (22) présente une saillie annulaire (86) autour de la perforation et sur le côté détourné de la surface d'appui (20), saillie qui entoure au moins partiellement le bourrelet (32), et **en ce qu'**un renfoncement annulaire (90) entoure la saillie annulaire (86), et/ou **en ce que** le renfoncement annulaire (90) dans la pièce en tôle est entouré par une surface plane (96) qui se trouve dans un plan perpendiculaire à l'axe longitudinal (14) de l'élément de fixation.

17. Composant d'assemblage selon la revendication 16,
**caractérisé en ce que**
la portion formant corps (16) présente un tronçon de bride (40), la surface d'appui annulaire (20) et la gorge annulaire (21) s'étendant axialement étant prévues sur ou dans le tronçon de bride (40) sur son côté tourné vers la portion poinçonnée (18), et **en ce que** la surface plane (96) se trouve au moins partiellement à l'opposé du tronçon de bride (40) et de la surface d'appui annulaire (20).

18. Composant d'assemblage selon l'une des revendications 15 à 17,
**caractérisé en ce que**
la gorge annulaire (21) s'étend radialement à l'intérieur du bourrelet annulaire (32) ou est délimitée par le bourrelet annulaire (32) sur le côté de la portion poinçonnée, et **en ce que** la pièce en matériau de tôle remplit également cette zone de la gorge annulaire (21), et **en ce que** dans la zone radialement à l'intérieur du bourrelet annulaire (32), la gorge annulaire (21) présente, dans un plan de coupe axial, au moins sensiblement la forme d'un demi-cercle, et/ou **en ce que** le bourrelet annulaire (32) présente, dans un plan de coupe axial, une forme au moins sensiblement triangulaire, et **en ce que** la gorge annulaire (90) dans le bord de la perforation présente la même forme.

19. Composant d'assemblage selon l'une des revendications 15 à 18,
**caractérisé en ce que**
le renfoncement annulaire (34), vu dans un plan de coupe axial, présente au moins sensiblement la forme d'un demi-cercle, et **en ce que** le matériau de tôle remplit au moins partiellement le renfoncement annulaire.

20. Composant d'assemblage selon l'une des revendications 15 à 19,
**caractérisé en ce que**
les nervures anti-rotation (26) s'étendent en surélévation à l'intérieur de la gorge annulaire (21) en direction axiale jusqu'au bourrelet, c'est-à-dire qui présentent au moins sensiblement une forme à angle droit avec deux bras, et **en ce que** le matériau de tôle est mis en forme autour des deux bras des nervures anti-rotation, et/ou **en ce que** des tronçons (26') des nervures anti-rotation (26), qui s'étendent axialement ne dépassent pas au-delà du sommet (31) du bourrelet (32) en direction radiale et sont de préférence agencés légèrement en retrait radial par rapport au sommet, et/ou **en ce que** les tronçons (26') des nervures anti-rotation (26), qui s'étendent axialement ne dépassent pas ou que de peu au-delà de la surface d'appui annulaire (20) en direction axiale.

21. Composant d'assemblage selon l'une des revendications 15 à 20,
**caractérisé en ce que**
le bourrelet annulaire (32) présente la forme d'au moins une spire d'un pas de vis, et/ou **en ce que** le bourrelet annulaire (32) présente la forme d'au moins deux tronçons (32', 32") d'une spire d'un pas de vis, et en particulier **en ce que** le bourrelet (32) présente la forme de tronçons (32', 32") d'une spire d'un pas à gauche et d'une spire d'un pas à droite, qui sont agencés en alternance autour de l'axe longitudinal (14), les tronçons de spire (32', 32") étant de préférence raccordés l'un à l'autre et formant un anneau fermé, et en particulier **en ce qu'**il est prévu au total quatre tronçons de spire (32', 32").

22. Procédé pour réaliser un composant d'assemblage selon l'une ou plusieurs des revendications 15 à 21, **caractérisé par** les étapes suivantes :
a) on fait supporter la pièce en tôle (22) sur la matrice (60) qui présente un perçage (62) avec un diamètre (D) qui est conçu pour recevoir l'arête de coupe annulaire (30) de l'élément fonctionnel (10), le perçage (62) de la matrice (60) étant entouré par une saillie annulaire (64) qui, sur le côté radialement détourné du perçage, se transforme en une surface (66) perpendiculaire à l'axe longitudinal (68) du perçage, l'axe longitudinal (68) du perçage étant au moins sensiblement en alignement avec l'axe longitudinal (14) de l'élément fonctionnel,
b) on déplace l'élément fonctionnel (10) en direction vers la pièce en tôle (22) et vers la matrice (60) située au-dessous, et au moyen de l'arête de coupe annulaire (30) on sépare une pastille de poinçonnage (80) hors de la pièce en tôle (22), pastille qui est reçue à travers le perçage (62 ; 63) de la matrice ou bien évacuée à travers celui-ci ;
c) simultanément avec la séparation de la pastille de poinçonnage (80)
ou bien ensuite, le matériau de tôle est mis en forme au moyen de la saillie annulaire (64) jusque dans la gorge annulaire (21) et autour du bourrelet (32) et au moins partiellement jusque dans le renfoncement annulaire (34), par le mouvement de la portion formant corps (16) vers la pièce en tôle (22) et vers la matrice, afin d'établir une liaison en coopération de formes entre la pièce en tôle (22) et l'élément fonctionnel (10).

23. Procédé selon la revendication 22,
**caractérisé en ce que**
lors de la mise en forme du matériau en tôle (22) par la saillie annulaire (64), le matériau en tôle est également mis en forme autour ou jusque dans les caractéristiques ou nervures anti-rotation (26), et/ou **en ce qu'**au moyen de ladite surface (66) de la matrice qui est perpendiculaire à l'axe longitudinal (68), le matériau en tôle (22) est pressé à plat dans la zone de l'élément de fixation radialement à l'extérieur d'un renfoncement causé par la saillie annulaire (62), et/ou **en ce que** le matériau en tôle (22) est mis en forme en un collier annulaire (86) entourant le bourrelet (32).

24. Procédé pour réaliser un élément fonctionnel (10) présentant un axe longitudinal (14), une portion formant corps (16), une portion poinçonnée creuse (18), une surface d'appui annulaire (20) sur la portion formant corps, qui s'étend sensiblement perpendiculairement à l'axe longitudinal (14) et radialement en éloignement de la portion poinçonnée (18), et une gorge annulaire (21) s'étendant axialement qui est prévue dans la portion formant corps (16) radialement à l'intérieur de la surface d'appui (20), la portion formant corps (16) présentant sur le côté détourné de la portion poinçonnée (18) une surface de pressage (24), et des nervures anti-rotation (26) étant de préférence prévues qui recoupent au moins partiellement la gorge annulaire, et l'extrémité libre de la portion poinçonnée (18) étant pourvue d'une arête de coupe annulaire (30), un bourrelet annulaire (32) étant prévu sur la portion poinçonnée (18) entre la surface d'appui annulaire (20) et l'extrémité libre de la portion poinçonnée (18), et il est prévu, entre le bourrelet (32) et l'extrémité frontale libre de la portion poinçonnée, un renfoncement annulaire (34) autour de la portion poinçonnée, en particulier d'un élément fonctionnel selon l'une des revendications 1 à 14, par déformation à froid,
**caractérisé par** les étapes suivantes de déformation à froid :
a) une ébauche tout d'abord cylindrique est transformée en une ébauche (120) pour l'élément fonctionnel (10) par une ou par plusieurs passes, l'extrémité frontale du tronçon cylindrique ainsi que l'extrémité opposée de l'ébauche étant chacune cannelées pour former des cannelures respectives (128 ; 132), et on réalise la portion formant corps (16) avec la gorge annulaire (21) et avec un tronçon cylindrique (136) qui sera ultérieurement mis en forme de portion poinçonnée (18), ainsi que le cas échéant des caractéristiques anti-rotation (26) dans la zone de la gorge annulaire (21) et/ou sur le tronçon cylindrique (136),
b) on déplace en direction de la gorge annulaire (21) le matériau au voisinage de l'extrémité frontale du tronçon cylindrique pour réaliser le bourrelet annulaire (32) avec réduction du diamètre extérieur du tronçon cylindrique (136) dans la zone de son extrémité frontale, et lors de la réalisation du bourrelet (32) sous la forme d'une spire d'un pas de vis ou sous la forme de plusieurs tronçons (32' ; 32") d'un pas de vis, les nervures anti-rotation (26 ; 26") sont déformées à leurs extrémités libres,
c) dans une autre passe, on met en forme l'extrémité frontale de l'élément fonctionnel (10) et on augmente son diamètre, afin de former l'arête de coupe (30) à l'extrémité frontale du tronçon cylindrique et de former entre celle-ci et le bourrelet une gorge annulaire (34) autour du tronçon cylindrique,
d) l'ébauche ainsi finie est ensuite ou simultanément perforée au moyen d'un poinçon de perforation dans la zone entre les deux cannelures (130, 132), la zone perforée étant ensuite pourvue d'un pas de vis, si désiré.
